# EUROPEAN PATENT APPLICATION

(11) **EP 3 489 648 A1**
(43) Date of publication of application: **29.05.2019**
(21) Application number: 17830756.7
(22) Date of filing: 13.06.2017
(51) Int. Cl.: G01L 5/00, B60B 1/14, G01L 3/14, G01L 5/16, G01L 5/20

(54) **WHEEL EQUIPPED WITH SENSING DEVICE**

(30) Priority: 19.07.2016 JP 2016141157; 30.08.2016 JP 2016167816; 28.10.2016 JP 2016211659
(71) Applicant: NSK Ltd., Tokyo 141-8560 (JP)
(72) Inventor: KAWAHARA Hiroshi, Fujisawa-shi Kanagawa 251-8501 (JP); GUNJI Daisuke, Fujisawa-shi Kanagawa 251-8501 (JP); SODA Fumiaki, Fujisawa-shi Kanagawa 251-8501 (JP); HASHIMOTO Koji, Fujisawa-shi Kanagawa 251-8501 (JP)
(74) Representative: Grünecker Patent- und Rechtsanwälte PartG mbB
(86) International application number: PCT/JP2017/021849
(87) International publication number: WO 2018/016236

(57) **Abstract**

In the present invention, a wheel equipped with a sensing device comprises a wheel and a sensing device. The sensing device has a displacement extraction member, a to-be-detected part, and a detecting part. One radial-direction end of the displacement extraction member is supported by one radial-direction end portion of the wheel. The other radial-direction end of the displacement extraction member is an unsupported end. The to-be-detected part is provided to one of the other radial-direction end portion of the wheel and the other radial-direction end of the displacement extraction member. The detecting part is provided to the other of the other radial-direction end portion of the wheel and the other radial-direction end of the displacement extraction member, and is disposed in the vicinity of the to-be-detected part. The output of the detecting part changes in accordance with changes in the positional relationship of the detecting part and the to-be-detected part.

## Description

### TECHNICAL FIELD

The present invention relates to a wheel equipped with a sensing device that is to be used for measuring load, torque and the like to be applied to a vehicle wheel.

### RELATED ART

Recently, in order to secure traveling stability and traveling safety of an automobile, a variety of vehicle control systems such as an ABS (anti-lock braking system), a TCS (traction control system), a VSC (vehicle stability control) and the like have been developed. In order to control the vehicle control system, it is required to correctly detect conditions (for example, a rotating speed, a load, a temperature and the like) of a vehicle wheel under traveling.

Considering the above situation, Patent Document 1 discloses a technology of measuring a deformation amount of a tire of the tire and a wheel configuring a vehicle wheel, thereby obtaining a load (vertical load and the like) applied to the vehicle wheel. According to the technology, it is possible to obtain the load being applied to the vehicle wheel during traveling, so that it is possible to use the same for posture control and the like of an automobile.

However, according to the technology, the aging degradation and the change in air pressure are likely to occur in the tire, so that the measurement accuracy of the load is correspondingly likely to be lowered.

Patent Document 2 discloses a technology of measuring a deformation amount of a wheel of a tire and the wheel configuring a vehicle wheel by a strain sensor, thereby obtaining a load applied to the vehicle wheel. According to the technology, since the aging degradation is more difficult to occur in the wheel (as compared to the tire), a possibility that the measurement accuracy of the load will be likely to be lowered in association with the aging degradation is low.

However, according to the technology, since the wheel has the considerably higher rigidity (as compared to the tire), the deformation amount, which is caused when the load is applied, is small. Therefore, it is difficult to sufficiently secure the reliability of the measurement focused on the accuracy and the sensitivity with the measurement of the strain sensor.

In recent years, in order to control the traveling of the automobile, for example, it is required to measure torque to be applied to the vehicle wheel. Considering this situation, for example, Patent Documents 3 and 4 disclose a torque measurement device that includes an annular structure configured to be elastically deformed in correspondence to torque applied to the vehicle wheel and a sensor configured to change an output in correspondence to an elastic deformation amount of the annular structure, and is configured to measure the torque on the basis of the output of the sensor.

However, the torque measurement device is configured separately from the vehicle wheel, and is mounted with being fitted between the wheel configuring the vehicle wheel and an axle-side hub flange. For this reason, it is troublesome to manage the torque measurement device and to mount the torque measurement device to the hub flange.

In order to avoid the above problems, it is required to provide the wheel configuring the vehicle wheel with a function for measuring the torque to be applied to the wheel.

### Citation List

### Patent Documents

Patent Document 1: JP-A-2011-93426
Patent Document 2: JP-A-2002-39744
Patent Document 3: JP-A-2005-241470
Patent Document 4: Japanese Patent No. 5,396,147B

### SUMMARY OF THE INVENTION

### Problems To Be Solved By the Invention

The present invention has been made in view of the above situations, and is to implement a structure capable of easily securing reliability of measurement of a load and the like to be applied to a vehicle wheel or to implement a structure where a wheel configuring a vehicle wheel is provided with a function for measuring torque to be applied to the wheel.

### Means for Solving the Problems

In a first aspect, a wheel equipped with a sensing device of the present invention includes a wheel and a sensing device.

The wheel has a cylindrical rim part to which a tire can be mounted at an outer diameter-side thereof, and a disc part having a radially outer end portion joined to the rim part.

Also, the sensing device includes a displacement extraction member, a to-be-detected part, and a detecting part.

One radial end portion of the displacement extraction member is supported (in a cantilever manner) to one radial end-side part (including one end portion and a portion close to the one end portion) of the wheel. The other radial end portion of the displacement extraction member is a free end.

Also, the to-be-detected part is provided (supported or integrally formed) to one of the other radial end-side part (including the other end portion and a portion close to the other end portion) of the wheel and the other radial end portion of the displacement extraction member.

Also, the detecting part is provided to the other of the other radial end-side part of the wheel and the other radial end portion of the displacement extraction member, and is arranged in the vicinity of the to-be-detected part.

It is possible to change an output of the detecting part, in association with a change in positional relationship between the detecting part and the to-be-detected part.

When implementing the present invention, the shape, number and the like of the displacement extraction member are not particularly limited.

As the displacement extraction member, for example, a pseudo-spoke arranged at at least one circumferential place (preferably, a plurality of places) and having one radial end portion supported to the one radial end-side part of the wheel may be adopted.

Alternatively, as the displacement extraction member, for example, a configuration including a plurality of pseudo-spokes arranged at a plurality of circumferential places and each having one radial end portion supported to the one radial end-side part of the wheel, and an annular coupling part configured to couple the other radial end portions of the respective pseudo-spokes each other may be adopted.

Also, when implementing the present invention, as an aspect of the to-be-detected part, a to-be-detected part conforming to a detection manner of the detecting part (for example, a conductive to-be-detected part when the detecting part is an eddy current type, a magnetic to-be-detected part when the detecting part is a magnetic detection type and a to-be-detected part having a light reflecting property when the detecting part is an optical type) is adopted.

Also, as the to-be-detected part, for example, a circular ring-shaped to-be-detected part coupled in a circumferential direction of the wheel may be adopted.

Also, as the to-be-detected part, one to-be-detected part provided at one circumferential place of the wheel or a plurality of to-be-detected parts provided at a plurality of circumferential places of the wheel may be adopted.

Also, when implementing the present invention, as a sensor including the detecting part, a displacement sensor may be adopted. As the displacement sensor, a variety of types (detection manners) of displacement sensors such as an eddy current type, an electrostatic capacitance type, a laser type, a magnetic detection type and the like may be adopted in conformity with the aspect of the to-be-detected part.

Also, when implementing the present invention, as the displacement sensor, a configuration (first configuration) where only displacement sensors configured to detect radial displacement of the to-be-detected part are respectively arranged at a plurality of circumferential places of the wheel may be adopted.

Alternatively, as the displacement sensor, a configuration (second configuration) where only displacement sensors configured to detect axial displacement of the to-be-detected part are respectively arranged at a plurality of circumferential places of the wheel may be adopted.

Alternatively, as the displacement sensor, a configuration (third configuration) where a displacement sensor configured to detect radial displacement of the to-be-detected part and a displacement sensor configured to detect axial displacement of the to-be-detected part are arranged at each of a plurality of circumferential places of the wheel may be adopted.

Also, when adopting the first configuration and the third configuration, for example, as the displacement sensor configured to detect the radial displacement, a planar coil (overlap sensor) configured to change an output in association with a change in axially facing area with the to-be-detected part may be adopted. The planar coil may be mounted on a substrate.

Also, when adopting the second configuration and the third configuration, as the displacement sensor configured to detect the axial displacement, a planar coil (gap sensor) configured to change an output in association with a change in axially facing distance with the to-be-detected part may be adopted. The planar coil may be mounted on a substrate.

Also, when adopting the third configuration, two planar coils (an overlap sensor and a gap sensor) arranged at the same place in the circumferential direction may be mounted on a single substrate.

Also, when implementing the present invention, as the detecting part, a coil coupled in the circumferential direction of the wheel (a coil of which impedance changes in association with the change in the positional relationship with the to-be-detected part) may be adopted.

In a second aspect, a wheel equipped with a sensing device of the present invention includes a wheel and a sensing device.

The wheel has a cylindrical rim part to which a tire can be mounted at an outer diameter-side thereof, and a disc part having a radially outer end portion joined to the rim part.

Also, the sensing device includes a displacement extraction member, a to-be-detected part, and a detecting part.

One radial end portion of the displacement extraction member is supported to one radial end-side part (a part located at a more radially outer side than a radially central position and including one end portion and a portion close to the one end portion) of the wheel. The other radial end portion of the displacement extraction member is a free end.

Also, the to-be-detected part is provided (supported or integrally formed) to one of the other radial end-side part (a part located at a more radially inner side than the radially central position and including the other end portion and a portion close to the other end portion) of the wheel and the other radial end portion of the displacement extraction member.

Also, the detecting part is provided to the other of the other radial end-side part of the wheel and the other radial end portion of the displacement extraction member, and is arranged in the vicinity of the to-be-detected part.

It is possible to change an output of the detecting part, in association with a change in positional relationship in a circumferential direction of the wheel between the detecting part and the to-be-detected part.

When implementing the present invention, the shape, number and the like of the displacement extraction member are not particularly limited.

As the displacement extraction member, for example, a pseudo-spoke (a rod-shaped member having an outer shape like a spoke) arranged at at least one circumferential place (preferably, a plurality of places) and having one radial end portion supported to the one radial end-side part of the wheel may be adopted.

Alternatively, as the displacement extraction member, for example, a configuration including a plurality of pseudo-spokes arranged at a plurality of circumferential places and each having one radial end portion supported to the one radial end-side part of the wheel, and an annular coupling part configured to couple the other radial end portions of the respective pseudo-spokes each other may be adopted.

Also, when implementing the present invention, one set or a plurality of sets of a combination of the detecting part and the to-be-detected part may be provided. When the plurality of sets is provided, for example, the respective sets may be arranged with being spaced (for example, equally spaced) in the circumferential direction of the wheel.

Also, when implementing the present invention, for example, as the detecting part, a detecting part of a displacement sensor arranged to face the to-be-detected part in the circumferential direction of the wheel and configured to change an output in association with the change in the circumferentially positional relationship with the to-be-detected part.

As the displacement sensor, a variety of types (detection manners) of displacement sensors such as an eddy current type, an electrostatic capacitance type, a laser type, a magnetic detection type and the like may be adopted in conformity with the aspect of the to-be-detected part. In other words, when a detecting part of a displacement sensor is adopted as the detecting part, a to-be-detected part conforming to a detection manner of the displacement sensor (for example, a conductive to-be-detected part when the displacement sensor is an eddy current type, a magnetic to-be-detected part when the displacement sensor is a magnetic detection type and a to-be-detected part having a light reflecting property when the displacement sensor is an optical type) is adopted as the to-be-detected part.

### Effects of the Invention

According to the wheel equipped with a sensing device of the present invention in the first aspect configured as described above, it is possible to easily secure the reliability of the measurement of load and the like to be applied to the vehicle wheel (the tire and the wheel).

That is, according to the present invention, for example, when a load is applied to the vehicle wheel, the wheel is elastically deformed by an amount corresponding to the load. As a result, the positional relationship between the to-be-detected part and the detecting part changes, so that the output of the detecting part correspondingly changes. Therefore, it is possible to obtain the load by using the output of the detecting part.

In particular, according to the present invention, one radial end portion of the displacement extraction member is supported in a cantilever manner to one radial end-side portion of the wheel, the to-be-detected part is provided to one of the other radial end-side portion of the wheel and the other radial end portion of the displacement extraction member, and the detecting part is provided to the other. For this reason, when a change amount in the positional relationship between the to-be-detected part and the detecting part, which occurs when the load applied to the vehicle wheel changes, increases, like a change amount in positional relationship between one radial end-side part and the other radial end-side part of the wheel, and a change amount in the output of the detecting part also increases.

Also, according to the present invention, the to-be-detected part and the detecting part are arranged to be adjacent to each other, based on the provision of the displacement extraction member. For this reason, it is possible to increase the output of the detecting part. Therefore, according to the present invention, it is possible to easily secure the reliability of the measurement of the load.

According to the wheel equipped with a sensing device of the present invention in the second aspect configured as described above, the sensing device for measuring torque to be applied to the wheel is added to the wheel. Therefore, it is possible to easily manage the product and to facilitate the mounting to the vehicle.

### BRIEF DESCRIPTION OF THE DRAWINGS

FIG. 1 is a perspective view depicting a wheel equipped with a sensing device of a first example of an embodiment of the present invention, as seen from an axially outboard side.
FIG. 2 is a perspective view depicting the wheel equipped with a sensing device of the first example of the embodiment of the present invention, as seen from an axially inboard side.
FIG. 3A is a plan view depicting the wheel equipped with a sensing device of the first example of the embodiment of the present invention, as seen from the axially outboard side, and FIG. 3B is a sectional view taken along a line A-A in FIG. 3A.
FIG. 4 is a plan view depicting the wheel equipped with a sensing device of the first example of the embodiment of the present invention, as seen from the axially inboard side.
FIG. 5 is an enlarged view of a B part in FIG. 3B.
FIG. 6 is a line diagram depicting theoretical values of output signals of a plurality of displacement sensors in a state where a vehicle wheel is rotating with constant load being applied thereto, in the first example of the embodiment of the present invention.
FIG. 7 is a sectional view depicting the wheel equipped with a sensing device of the first example of the embodiment of the present invention in a state where the wheel is combined with a tire and a rolling bearing unit for vehicle wheel support.
FIG. 8 is a perspective view depicting a wheel equipped with a sensing device of a second example of the embodiment of the present invention, as seen from the axially inboard side.
FIG. 9 is a view similar to FIG. 5, depicting the wheel equipped with a sensing device of the second example of the embodiment of the present invention.
FIG. 10 is a line diagram depicting a theoretical value of an output signal of sensor (coil) in a state where the vehicle wheel is rotating with constant load being applied thereto, in the second example of the embodiment of the present invention.
FIG. 11 is a perspective view depicting a wheel equipped with a sensing device of a third example of the embodiment of the present invention, as seen from the axially outboard side.
FIG. 12 is a half sectional view depicting a wheel equipped with a sensing device of a fourth example of the embodiment of the present invention.
FIG. 13 is a half sectional view depicting a wheel equipped with a sensing device of a fifth example of the embodiment of the present invention.
FIG. 14 is a half sectional view depicting a wheel equipped with a sensing device of a sixth example of the embodiment of the present invention.
FIG. 15 is a half sectional view depicting a wheel equipped with a sensing device of a seventh example of the embodiment of the present invention.
FIG. 16 is a perspective view depicting a wheel equipped with a sensing device of an eighth example of the embodiment of the present invention, as seen from the axially outboard side.
FIG. 17A is a plan view depicting the wheel equipped with a sensing device of the eighth example of the embodiment of the present invention, as seen from the axially outboard side, and FIG. 17B is a sectional view taken along a line C-O-C in FIG. 17A.
FIG. 18 is an enlarged view of a D part in FIG. 17B.
FIG. 19 is a sectional view depicting the wheel equipped with a sensing device of the eighth example of the embodiment of the present invention in a state where the wheel is combined with the tire and the rolling bearing unit for vehicle wheel support.
FIG. 20A is a plan view depicting a wheel equipped with a sensing device of a ninth example of the embodiment of the present invention, as seen from the axially outboard side, and FIG. 20B is a sectional view taken along a line E-O-E in FIG. 20A.
FIG. 21 is a view corresponding to an F-O-F section of FIG. 4, depicting a wheel equipped with a sensing device of a tenth example of the embodiment of the present invention.
FIG. 22 is an enlarged view of a G part in FIG. 21, depicting the wheel equipped with a sensing device of the tenth example of the embodiment of the present invention.
FIG. 23 is a view similar to FIG. 22, depicting a wheel equipped with a sensing device of an eleventh example of the embodiment of the present invention.
FIG. 24A is an enlarged view in an H arrow direction of FIG. 23, depicting only a to-be-detected member and a sensor substrate, and FIG. 24B is a view, as seen from the below of FIG. 24A.
FIG. 25 is a perspective view depicting a wheel equipped with a sensing device of a twelfth example of the embodiment of the present invention, as seen from the axially outboard side.
FIG. 26 is a perspective view depicting the wheel equipped with a sensing device of the twelfth example of the embodiment of the present invention, as seen from the axially inboard side.
FIG. 27A is a half plan view depicting the wheel equipped with a sensing device of the twelfth example of the embodiment of the present invention, as seen from the axially inboard side, and FIG. 27B is a sectional view taken along a line A-A in FIG. 27A.
FIG. 28 is an enlarged view of a B part in FIG. 27A.
FIG. 29 is an enlarged view of a C part in FIG. 27B.
FIG. 30 is a perspective view depicting the wheel equipped with a sensing device of a thirteenth example of the embodiment of the present invention, as seen from the axially outboard side.
FIG. 31A is a plan view depicting the wheel equipped with a sensing device of the thirteenth example of the embodiment of the present invention, as seen from the axially outboard side, and FIG. 31B is a sectional view taken along a line D-D in FIG. 31A.
FIG. 32 is an enlarged view of an E part in FIG. 31A.

### DETAILED DESCRIPTION OF EMBODIMENTS

### [First Example of Embodiment]

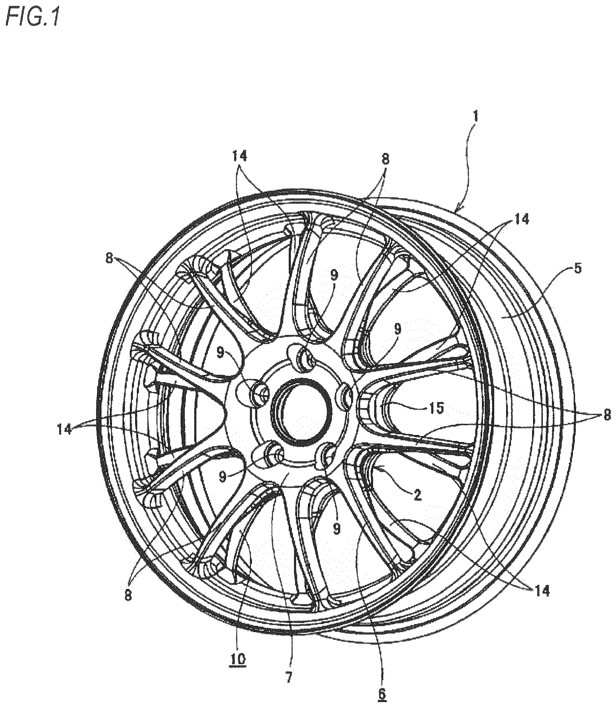

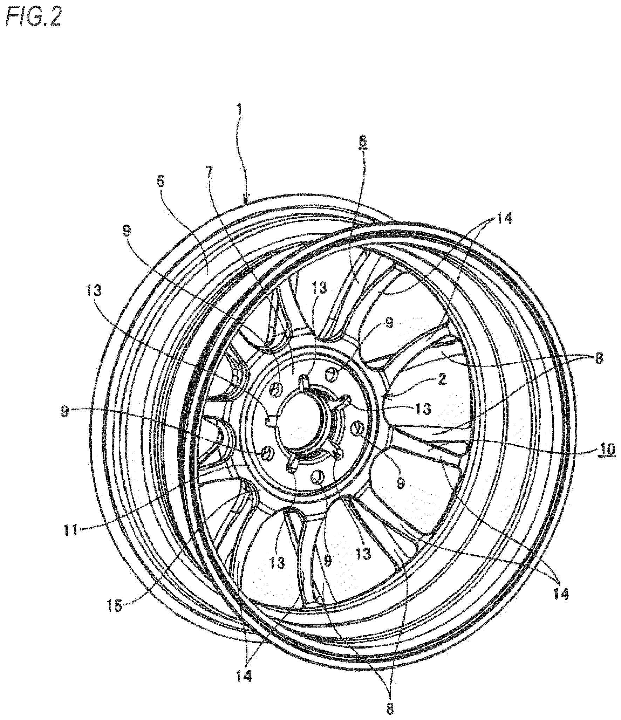

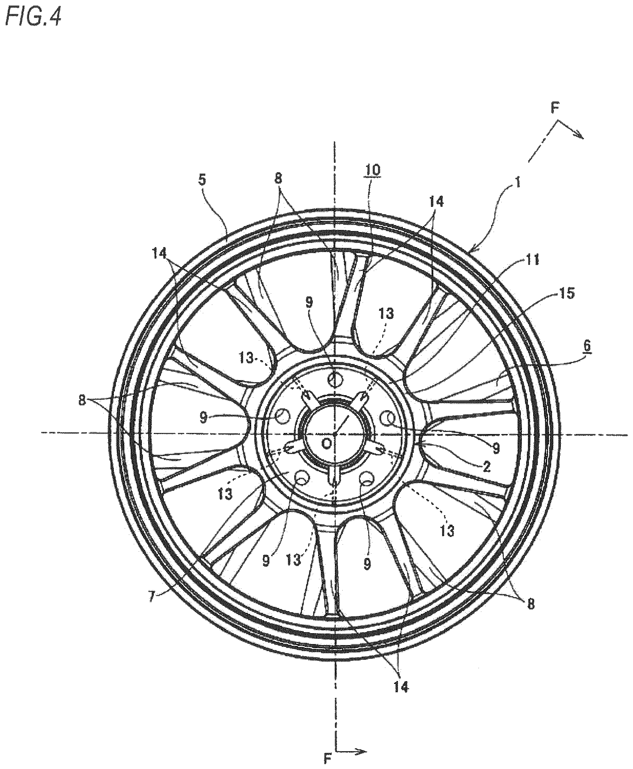

A first example of an embodiment of the present invention is described with reference to FIGS. 1 to 7.

In the first example, a wheel equipped with a sensing device includes a wheel 1 and a sensing device 2.

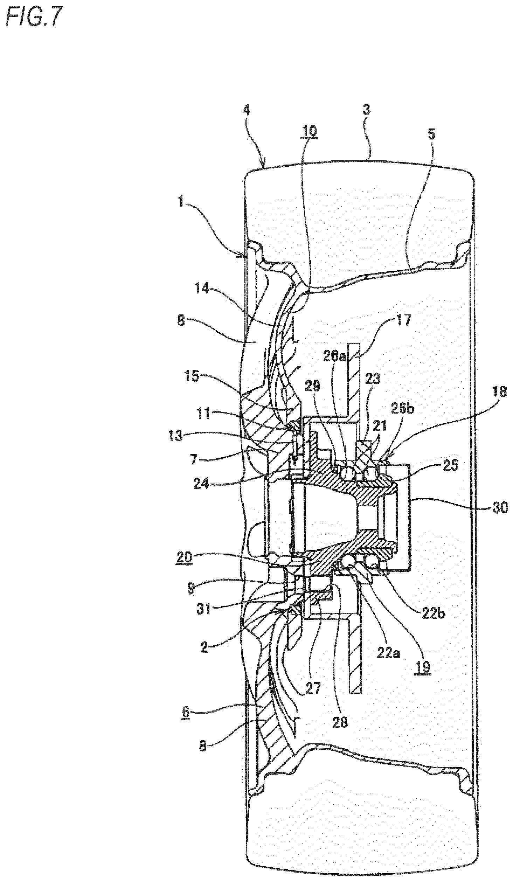

The wheel 1 configures a vehicle wheel 4 (refer to FIG. 7) together with a tire 3 made of rubber. The wheel 1 is made of metal having elasticity such as iron alloy, aluminum alloy and the like. In the first example, the wheel 1 has one-piece structure where the wheel is integrally made as a whole by casting such as die-cast. The wheel 1 has a cylindrical rim part 5 to which the tire 3 can be mounted at an outer diameter-side thereof, and a disc part 6 having a radially outer end portion joined to the rim part 5.

The disc part 6 has a circular ring-shaped mounting part 7 configuring a radially inner end portion thereof, and a plurality of spokes 8, 8 configuring radially intermediate portion and outer end portion thereof.

The spokes 8, 8 are radially arranged with being circumferentially spaced. A radially inner end portion of each of the spokes 8, 8 is integrally joined to axially outboard end portion and intermediate portion of an outer peripheral surface of the mounting part 7. A radially outer end portion of each of the spokes 8, 8 is integrally joined to a part close to an axially outboard end of an inner peripheral surface of the rim part 5.

Also, the mounting part 7 is a part that is to be joined and fixed to a hub 20 configuring a rolling bearing unit 18 for vehicle wheel support (which will be described later), for example. The mounting part 7 has mounting holes 9, 9 formed to axially penetrate at a plurality of circumferentially equidistant places.

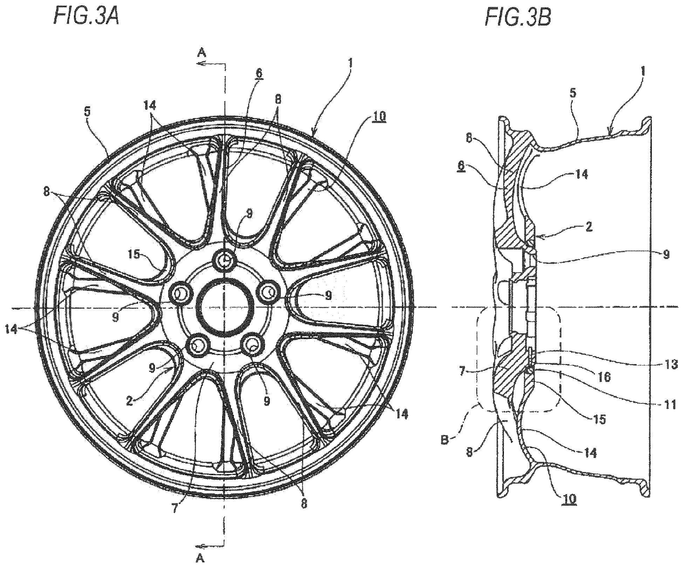

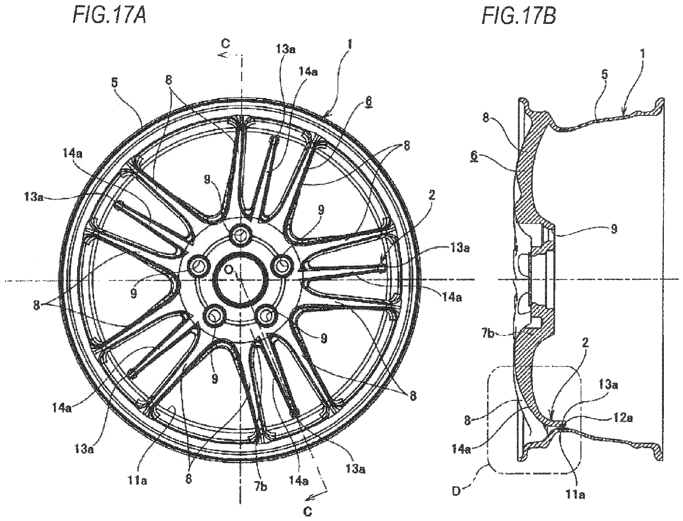

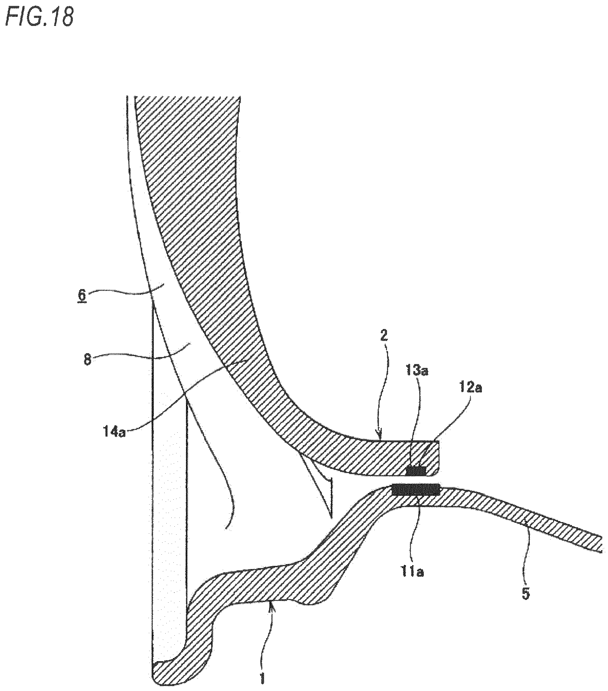

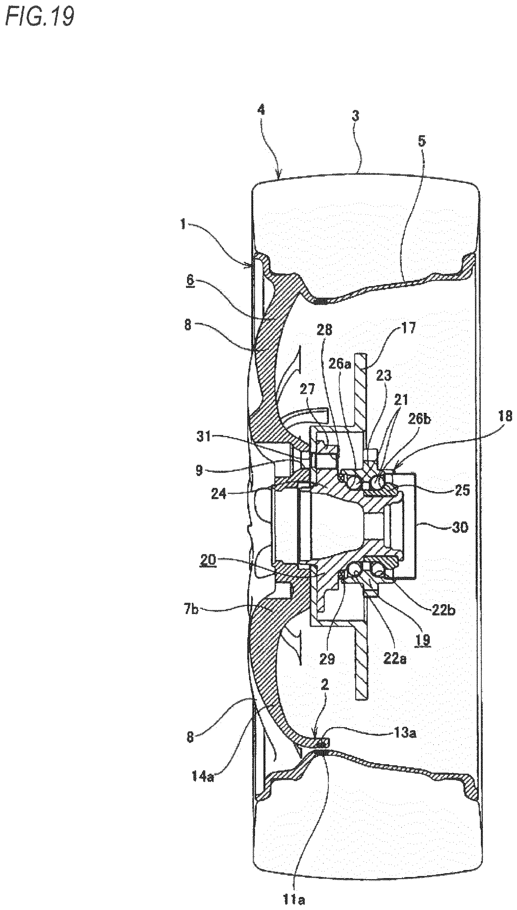

Meanwhile, in the entire specification, unless mentioned otherwise, the term "outboard" with respect to the axial direction indicates a side becoming an outer side in a width direction of a vehicle body in a mounted state to the vehicle, and for example, indicates a left side in FIGS. 3B, 5, 7, 9, 12 to 15, 17B, 18, 19 and 20B, and the term "inboard" with respect to the axial direction indicates a side becoming a center side in the width direction of the vehicle body, and for example, indicates a right side in FIGS. 3B, 5, 7, 9, 12 to 15, 17B, 18, 19 and 20B.

The sensing device 2 includes a displacement extraction member 10, a to-be-detected member 11 corresponding to the to-be-detected part, and a plurality of displacement sensors 13, 13 each of which includes a detecting part 12.

The displacement extraction member 10 is arranged at a radially inner side of the rim part 5 and at an axially outboard side of the disc part 6. The displacement extraction member 10 is formed integrally with the wheel 1 by the same material as the wheel 1. A radially outer end portion of the displacement extraction member 10 is supported in a cantilever manner to the rim part 5, which is the radially outer end part of the wheel 1. A radially inner end portion of the displacement extraction member 10 is a free end.

The displacement extraction member 10 has a plurality of (here, the same number as the spokes 8, 8) pseudo-spokes 14, 14 radially arranged with being circumferentially spaced and a circular ring-shaped annular coupling part 15 configured to couple radially inner end portions of the pseudo-spokes 14, 14 each other.

A radially outer end portion of each of the pseudo-spokes 14, 14 is integrally joined to a part close to the axially outboard end of the inner peripheral surface of the rim part 5. In the first example, the joining positions of the radially outer end portions of the pseudo-spokes 14, 14 to the inner peripheral surface of the rim part 5 deviate axially outboard and circumferentially with respect to the joining positions of the radially outer end portions of the spokes 8, 8 to the inner peripheral surface of the rim part 5.

In the meantime, the annular coupling part 15 is arranged at a radially outer side of an axially inboard end portion of the mounting part 7 to be coaxial (concentric) to the mounting part 7.

The to-be-detected member 11 has a circular ring shape as a whole having a rectangular section and is made of a conductive material having magnetism such as iron alloy. The to-be-detected member 11 is coaxially supported and fixed to the annular coupling part 15. In the first example, in order to coaxially support the to-be-detected member 11 to the annular coupling part 15, the to-be-detected member 11 is internally fitted and fixed to an inner peripheral surface of the annular coupling part 15 by interference fitting, adhesion, welding or the like.

Each of the displacement sensors 13, 13 is an eddy current type. A detection direction of each of the displacement sensors 13, 13 coincides with a radial direction of which a center is a central axis of the wheel 1. Radially outer end portions, which are the detecting parts 12, of the displacement sensors 13, 13, are supported and fixed to the mounting part 7, which is the radially inner end part of the wheel 1, with closely facing a plurality of circumferentially equidistant places of an inner peripheral surface of the to-be-detected member 11.

In the first example, in order to support and fix the displacement sensors 13, 13 to the mounting part 7, the axially inboard end portion of the mounting part 7 is formed with support holes 16 penetrating radially at a plurality of circumferentially equidistant places deviating from the mounting holes 9, 9. In a state where the displacement sensors 13, 13 are inserted in the respective support holes 16, the displacement sensors 13, 13 are fixed to the mounting part 7 by interference fitting, adhesion, screwing or the like. Also, in the first example, in a free state where a load is not applied to the wheel 1, radially facing distances between the inner peripheral surface of the to-be-detected member 11 and the detecting parts 12 of the respective displacement sensors 13, 13 are the same.

For example, as shown in FIG. 7, in a state where the tire 3 is mounted to the outer diameter-side of the rim part 5 to configure the vehicle wheel 4, the wheel equipped with a sensing device of the first example configured as described above is rotatably supported to a suspension device (not shown) by a rolling bearing unit 18 for vehicle wheel support, together with a brake rotor 17 configuring a disc brake device that is a braking device.

In the shown example, the rolling bearing unit 18 for vehicle wheel support is configured to support the vehicle wheel 4, as a non-driven wheel. A hub 20, which is a rotation-side race, is rotatably supported to an inner diameter-side of an outer ring 19, which is a stationary-side race, via a plurality of balls 21, 21 each of which is a rolling element.

The outer ring 19 has a substantially circular ring shape as a whole. An inner peripheral surface of the outer ring 19 has a plurality of rows of outer ring races 22a, 22b. An outer peripheral surface of the outer ring 19 has a stationary-side flange 23.

The hub 20 is configured by a combination of a substantially circular ring-shaped hub main body 24 and an inner ring 25. An outer peripheral surface of the hub 20 has a plurality of rows of inner ring races 26a, 26b. The hub 20 is supported to an inner diameter-side of the outer ring 19 coaxially to the outer ring 19. Specifically, an axially intermediate portion of an outer peripheral surface of the hub main body 24 is directly formed with the inner ring race 26a of the axially outboard row, and the inner ring 25 having the inner ring race 26b of the axially inboard row formed on the outer peripheral surface is externally fitted and fixed to a part close to an axially inboard end of the hub main body 24. Also, an axially outboard end portion of the hub main body 24, which more protrudes axially outboard than an axially outboard end opening of the outer ring 19, is provided with a rotation-side flange 27 for supporting the vehicle wheel 4 and the brake rotor 17. Also, the rotation-side flange 27 is formed with a mounting hole (a screw hole or a through-hole) 28 axially penetrating.

The respective balls 21, 21 are rollably held in plural in each row between both the outer ring races 22a, 22b and both the inner ring races 26a, 26b by a cage with a contact angle of a back-to-back arrangement and a preload being applied.

Also, a seal ring 29 is provided between the axially outboard end opening of the outer ring 19 and an outer peripheral surface of an axially intermediate portion of the hub main body 24, so that an axially outboard end opening of a space, in which the respective balls 21, 21 are provided, is plugged. Also, a bottomed cylindrical cap (cover) 30 is fixed to an axially inboard end portion of the outer ring 19, so that the axially inboard end opening of the outer ring 19 is plugged. In the first example, at least a bottom plate part of the cap 30 is made of a non-magnetic material such as non-magnetic metal, a synthetic resin or the like.

When rotatably supporting the vehicle wheel 4 and the brake rotor 17 to the suspension device by the rolling bearing unit 18 for vehicle wheel support, the stationary-side flange 23 of the outer ring 19 is joined and fixed to a knuckle configuring the suspension device by joining members such as a plurality of bolts. Also, the vehicle wheel 4 and the brake rotor 17 are joined and fixed to the rotation-side flange 27 of the hub 20 (hub main body 24). To this end, specifically, a positioning cylinder portion (referred to as a pilot portion) provided at the axially outboard end portion of the hub main body 24 is sequentially inserted (internally fitted) into a rotor center hole formed at a radially central portion of the brake rotor 17 and a wheel center hole formed at a radially central part of the wheel 1 (a radially inner side of the mounting part 7), so that the wheel 1 and the brake rotor 17 are radially positioned. Then, in this state, the wheel 1 (mounting part 7) and the brake rotor 17 are joined and fixed to the hub main body 24 (rotation-side flange 27) by using the joining members such as a plurality of bolts inserted or screwed in mounting holes 28 of the rotation-side flange 27, mounting holes 31 of the brake rotor 17 and the mounting holes 9, 9 of the mounting part 7 of the wheel 1, which are arranged at positions in axial alignment with each other.

Also, in the first example, the rolling bearing unit 18 for vehicle wheel support includes a power feeding means (not shown), a signal communication means (not shown), and a rotating angle detection means (not shown). In particular, in the first example, the power feeding means, the signal communication means and the rotating angle detection means are provided in a radially inner space of the hub 20 and in an internal space of the cap 30.

The power feeding means includes a generator, a battery and a charger.

The generator includes a stator supported and fixed to the outer ring 19 directly or indirectly via the cap 30 or the like, and a rotor supported and fixed to the hub 20 directly or indirectly. The generator is configured to generate power that is to be fed to each of the displacement sensors 13, 13, based on relative rotation of the stator and the rotor.

Also, the battery is configured to accumulate the power generated by the generator.

Also, the charger is to charge the battery by feeding the power, which is generated by the generator, to the battery, and includes a rectification circuit for converting an alternating current voltage generated by the generator into a direct current voltage.

Also, the signal communication means includes a wireless communication device provided between electronic devices such as a calculator disposed at a vehicle body-side, and configured to wirelessly communicate the output signals of the displacement sensors 13, 13.

Also, the rotating angle detection means is an absolute type encoder such as an optical type, a magnetic type and the like known in the related art. The rotating angle detection means includes a stator for detection supported and fixed to the outer ring 19 directly or indirectly via the cap 30 and the like, and a rotor for detection supported and fixed to the hub 20 directly or indirectly. The rotating angle detection means can measure what degrees (what radians) the hub 20 is rotated from an origin position (initial setting value) of the outer ring 19, based on an output signal that changes in association with relative rotation of the stator for detection and the rotor for detection.

In the first example, when the hub 20 rotates together with the vehicle wheel 4 as the automobile travels, the rotor supported and fixed to the hub 20 rotates relative to the stator supported and fixed to the outer ring 19, so that the generator generates the power. Then, the alternating current voltage generated by the generator is converted into the direct current voltage and is charged in the battery by the charger.

The power charged in the battery is fed to the displacement sensors 13, 13 through a wiring such as a cable and the like (not shown) and is fed to the wireless communication device and the encoder, too. Then, each of the displacement sensors 13, 13 generates an output signal corresponding to the load applied to the vehicle wheel 4, and the encoder generates an output signal indicative of a rotating angle of the hub 20 relative to the outer ring 19. The output signals of the displacement sensors 13, 13 and the encoder are transmitted to the wireless communication device through the wiring such as a cable and the like (not shown). Then, the output signals of the displacement sensors 13, 13 and the encoder are wirelessly transmitted to the calculator arranged at the vehicle body-side through the bottom plate part configuring the cap 30 and made of a non-magnetic material by an antenna configuring the wireless communication device. As a result, as described later, the calculator calculates the load applied to the vehicle wheel 4 from the output signals of the displacement sensors 13, 13 and the encoder, and uses the same for an active safety technology of a vehicle.

Subsequently, a method of calculating the load applied to the vehicle wheel 4 (the tire 3 and the wheel 1) by the output signals of the displacement sensors 13, 13 and the like is described.

In the first example, when the load (composed load of vertical load, load in the front and rear direction accompanied by acceleration or deceleration, and the like) is applied to the vehicle wheel 4, the wheel 1 is elastically deformed by an amount corresponding to the load. Then, the annular coupling part 15 configuring the displacement extraction member 10 is displaced in association with the elastic deformation. As a result, the positional relationship between the to-be-detected member 11 supported to the annular coupling part 15 and the detecting part 12 of each of the displacement sensors 13, 13 supported to the mounting part 7 of the wheel 1 changes, so that the output signal of each of the displacement sensors 13, 13 correspondingly changes.

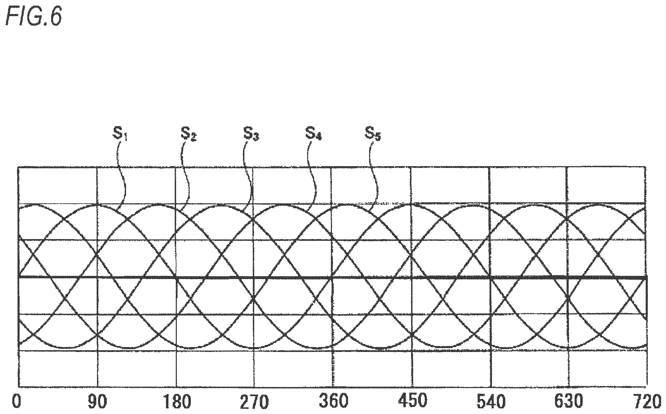

FIG. 6 depicts the output signals (S₁ to S₅) (by theoretical values) of the displacement sensors 13, 13 while the vehicle wheel 4 is rotating with only constant radial load being applied thereto. Amplitudes of the output signals (S₁ to S₅) of the displacement sensors 13, 13 change in correspondence to a magnitude of the radial load, and phases of the output signals (S₁ to S₅) change in correspondence to a direction of the radial load. Therefore, when a relation between the magnitude of the radial load and the amplitude is investigated in advance, it is possible to obtain the magnitude of the radial load from the amplitude by the calculator. Also, in the first example, the calculator can obtain the direction of the radial load (a direction in a stationary system) by associating the rotating angle of the hub 20 relative to the outer ring 19 (a rotating angle of a rotation system relative to the stationary system) obtained on the basis of the output signal of the encoder and the phases of the output signals (S₁ to S₅) of the displacement sensors 13, 13 each other. Also, it is possible to obtain the vertical load, which is a vertical component of the radial load.

In the meantime, when implementing the present invention, as the rotating angle detection means, an ABS sensor (a magnetic encoder + a magnetic sensor) may be adopted (used), instead of the absolute type encoder.

Also, in the first example, the radially outer end portion of the displacement extraction member 10 is supported in a cantilever manner to the radially outer end part (the rim part 5) of the wheel 1, the to-be-detected member 11 is supported to the radially inner end portion (the annular coupling part 15) of the displacement extraction member 10, and the displacement sensors 13, 13 (the detecting parts 12) are supported to the radially inner end part (the mounting part 7) of the wheel 1. For this reason, the change amount in the positional relationship between the to-be-detected member 11 and the detecting part 12 of each of the displacement sensors 13, 13, which is caused when the load applied to the vehicle wheel 4 changes, increases, like the change amount in the positional relationship between the radially outer end part and the radially inner end part of the wheel 1, and the change amount in the output of each of the displacement sensors 13, 13 also increases. Also, in the first example, the inner peripheral surface of the to-be-detected member 11 and the detecting part 12 of each of the displacement sensors 13, 13 are arranged to be adjacent to each other, based on the provision of the displacement extraction member 10. For this reason, it is possible to increase the output of each of the displacement sensors 13, 13. Therefore, in the first example, it is possible to easily secure the reliability of the measurement of the load.

Also, in the first example, it is possible to feed the power, which is generated (accumulated in the battery) by the generator provided to the rolling bearing unit 18 for vehicle wheel support, to each of the displacement sensors 13, 13. Also, it is possible to wirelessly transmit the output signal of each of the displacement sensors 13, 13 from the wireless communication device provided to the rolling bearing unit 18 for vehicle wheel support to the calculator provided to the vehicle body-side. For this reason, when mounting the rolling bearing unit 18 for vehicle wheel support to the knuckle, it is not necessary to perform an arranging operation of harness, so that it is possible to favorably increase the mounting operability. Also, it is possible to measure the load applied to the vehicle wheel in real time and to use the same for an active safety technology of a vehicle.

### [Second Example of Embodiment]

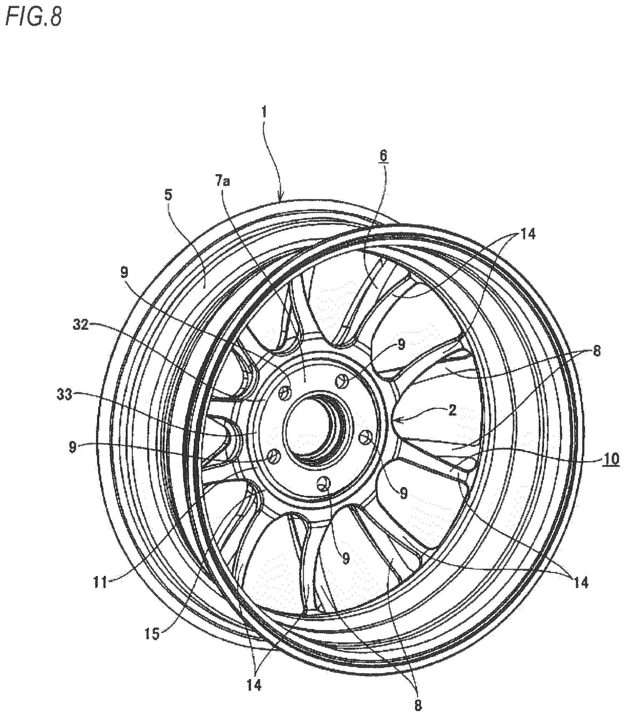

A second example of the embodiment of the present invention is described with reference to FIGS. 8 to 10.

In the second example, the sensor that is used in combination with the to-be-detected member 11 is different from the first example of the embodiment. That is, in the second example, one sensor is used, and a detecting part of the sensor 32 is configured as a single coil 33. The sensor 32 is externally fitted and fixed to an axially inboard end portion of a mounting part 7a configuring the wheel 1 by adhesion or the like in a state where an outer peripheral surface of the coil 33 is arranged to closely face the inner peripheral surface of the to-be-detected member 11 over an entire circumference.

In the second example, during the use, the power charged in the battery provided to the rolling bearing unit 18 for vehicle wheel support (refer to FIG. 7) is fed to the coil 33, so that the coil 33 is excited. Then, based on a change in impedance (the output signal of the sensor 32) of the coil 33, which is caused when a positional relationship between the coil 33 and the to-be-detected member 11 changes, the calculator provided to the vehicle body-side obtains the load applied to the vehicle wheel 4.

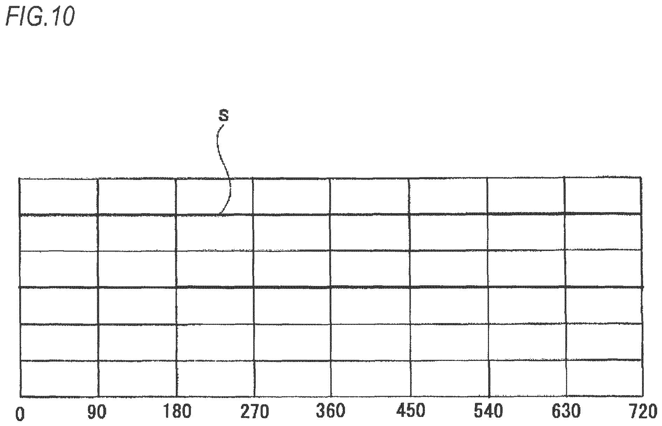

FIG. 10 depicts the output signal (S) of the sensor 32 (by the theoretical value) while the vehicle wheel 4 is rotating with only constant radial load being applied thereto. A magnitude of the output signal (S) of the sensor 32 changes, in correspondence to the magnitude of the radial load. Therefore, when a relation between the magnitude of the radial load and the magnitude of the output signal (S) of the sensor 32 is investigated in advance, it is possible to obtain the magnitude of the radial load from the magnitude of the output signal (S) of the sensor 32 by the calculator. Meanwhile, in the second example, the output signal (S) of the sensor 32 does not cause a change in phase, in correspondence to the direction of the radial load. For this reason, it is not possible to obtain the direction of the radial load (the direction in the stationary system) by using the rotating angle of the hub 20 relative to the outer ring 19 configuring the rolling bearing unit 18 for vehicle wheel support, like the first example of the embodiment. Thus, in the second example, the calculator estimates the load in the front and rear direction applied to the vehicle wheel 4, based on an output signal of an acceleration sensor and the like provided at the vehicle body-side. Then, the calculator obtains the vertical load applied to the vehicle wheel 4 by subtracting the estimated load in the front and rear direction from the radial load applied to the vehicle wheel 4, which is obtained from the output signal (S) of the sensor 32.

Therefore, in the second example, it is not necessary to provide the rolling bearing unit 18 for vehicle wheel support with the rotating angle detection means that is simply to be used so as to obtain the vertical load.

The other configurations and operations are the same as the first example of the embodiment.

### [Third Example of Embodiment]

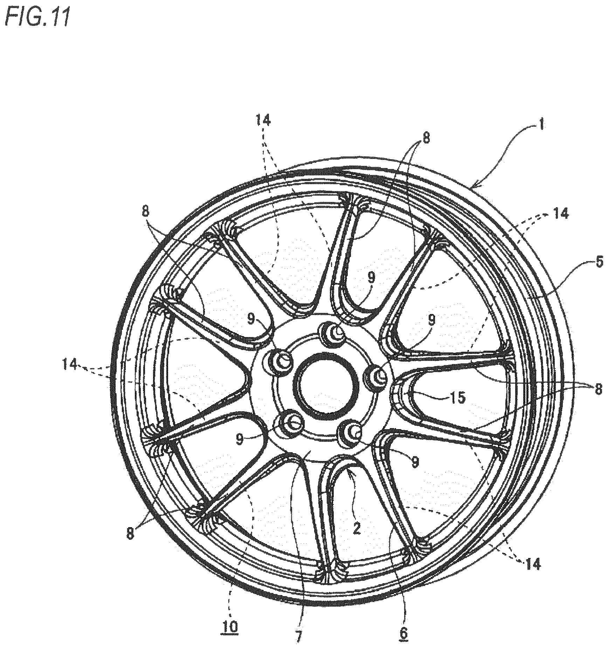

A third example of the embodiment of the present invention is described with reference to FIG. 11.

In the third example, the plurality of pseudo-spokes 14, 14 is arranged to overlap axially inboard the plurality of spokes 8, 8 configuring the wheel 1 (the plurality of pseudo-spokes is arranged to be hidden at the rear of the spokes 8, 8, as seen from the axially outboard side, i.e., to be axially overlapped, and in other words, to be the same phase in the circumferential direction).

In the third example configured as described above, it is possible to sufficiently reduce the influence of the pseudo-spokes 14, 14 on the design of the wheel 1, as seen from the axially outboard side.

The other configurations and operations are the same as the first example or second example of the embodiment.

### [Fourth Example of Embodiment]

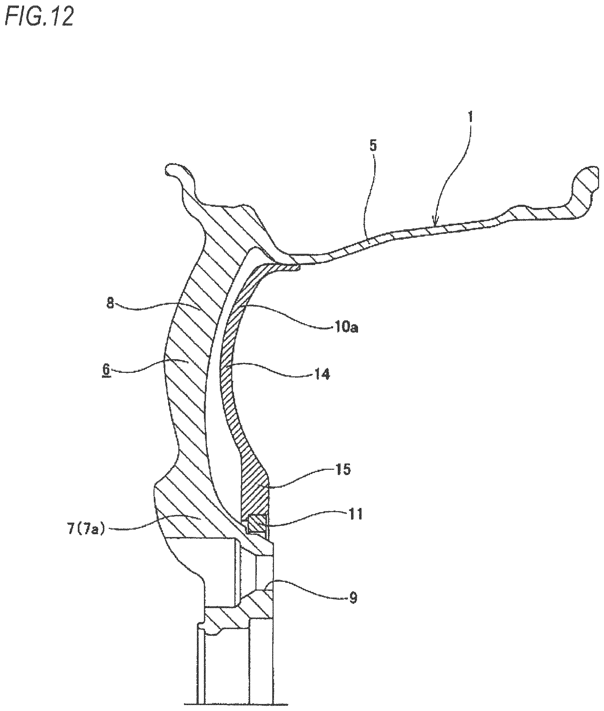

A fourth example of the embodiment of the present invention is described with reference to FIG. 12.

In the fourth example, the wheel 1 and a displacement extraction member 10a are separate components. A radially outer end portion of the displacement extraction member 10a is joined and fixed to the inner peripheral surface of the rim part 5 of the wheel 1 by welding, adhesion, press-fitting frictional force or the like.

In the fourth example, since the wheel 1 and the displacement acquisition member 10a are separate components, it is possible to apply the present invention to the existing wheel 1.

The other configurations and operations are the same as the first to third examples of the embodiment.

### [Fifth Example of Embodiment]

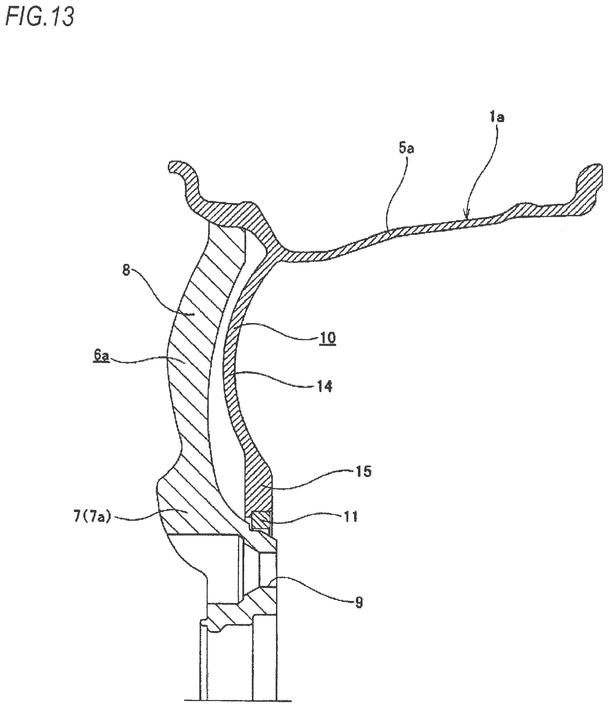

A fifth example the embodiment of the present invention is described with reference to FIG. 13.

In a wheel 1a of the fifth example, a rim part 5a and a disc part 6a are separate components. The wheel 1a has a two-piece structure where a radially outer end portion of the disc part 6a is joined and fixed to an inner peripheral surface of the rim part 5a by welding.

In the shown example, the displacement extraction member 10 and the rim part 5a are integrally formed. However, the displacement extraction member 10 and the rim part 5a may be separate components.

The other configurations and operations are the same as the first to third examples of the embodiment.

### [Sixth Example of Embodiment]

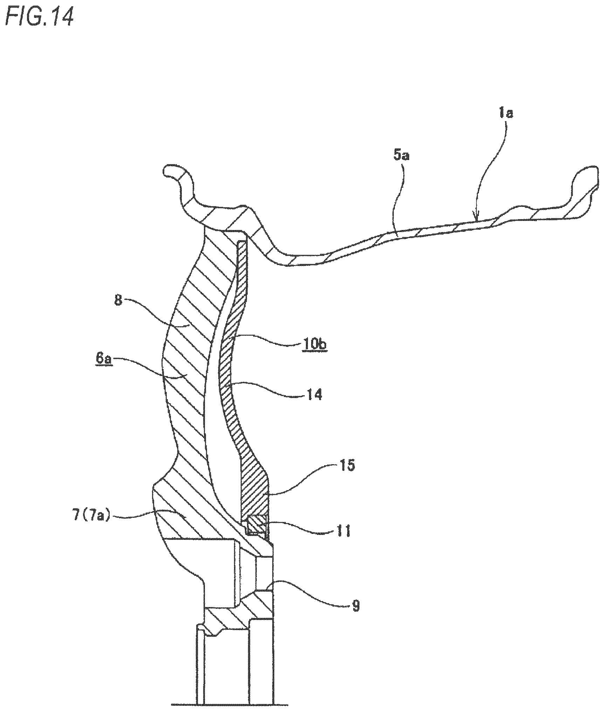

A sixth example of the embodiment of the present invention is described with reference to FIG. 14.

The wheel 1a of the sixth example has a two-piece structure, like the fifth example of the embodiment. Also, in the sixth example, the disc part 6a and a displacement extraction member 10b of the wheel 1a are separate components. A radially outer end portion of the displacement extraction member 10b (the pseudo-spokes 14, 14) is joined and fixed to a radially outer end portion of the disc part 6a (the spokes 8, 8), which is a part close to a radially outer end of the wheel 1a, by welding, adhesion, press-fitting frictional force or the like.

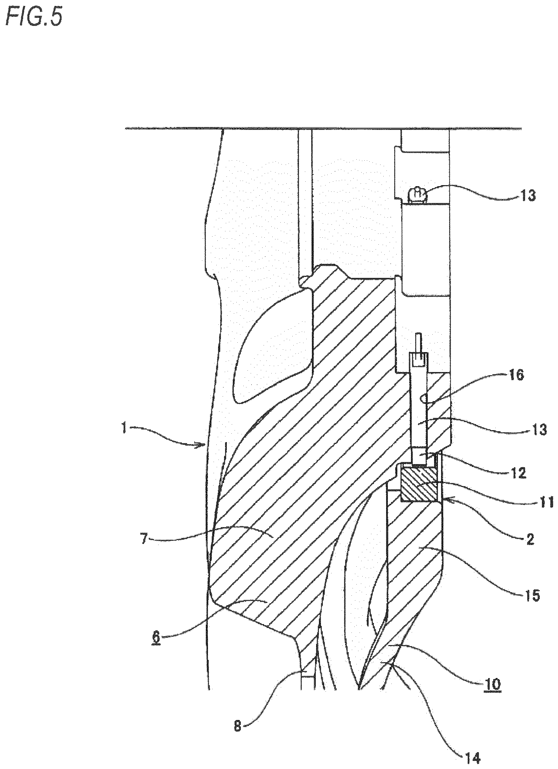

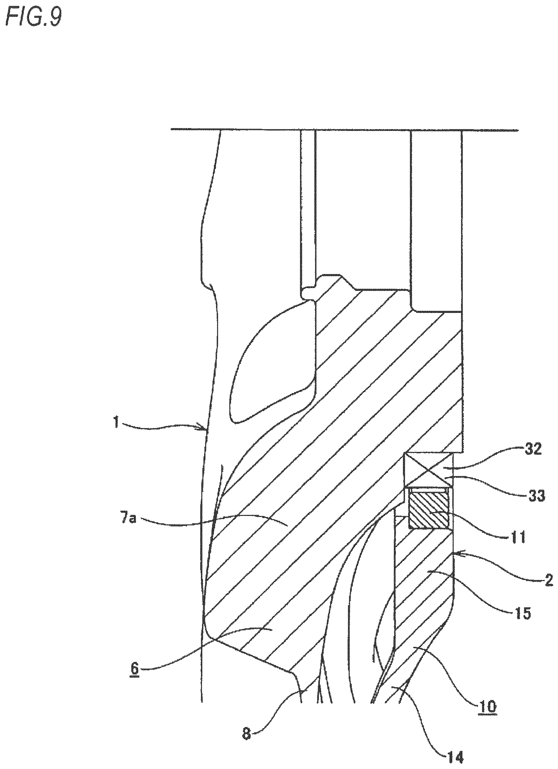

In the structure of the sixth example, the disc part 6a is mounted with the sensor (the plurality of displacement sensors 13 (refer to FIG. 5) or one sensor 32 (coil 33) (refer to FIG. 9)), the displacement extraction member 10b is mounted with the to-be-detected member 11, the disc part 6a and the displacement extraction member 10b are joined and fixed to each other and then the disc part 6a is joined and fixed to the rim part 5a. The assembling is performed in corresponding order, so that it is possible to easily perform the operation of mounting the sensor (13 or 32) to the disc part 6a and the operation of mounting the to-be-detected member 11 to the displacement extraction member 10b. Also, in the free state, it is possible to easily secure the concentricity of the sensor (13 or 32) and the to-be-detected member 11.

The other configurations and operations are the same as the first to third examples of the embodiment.

### [Seventh Example of Embodiment]

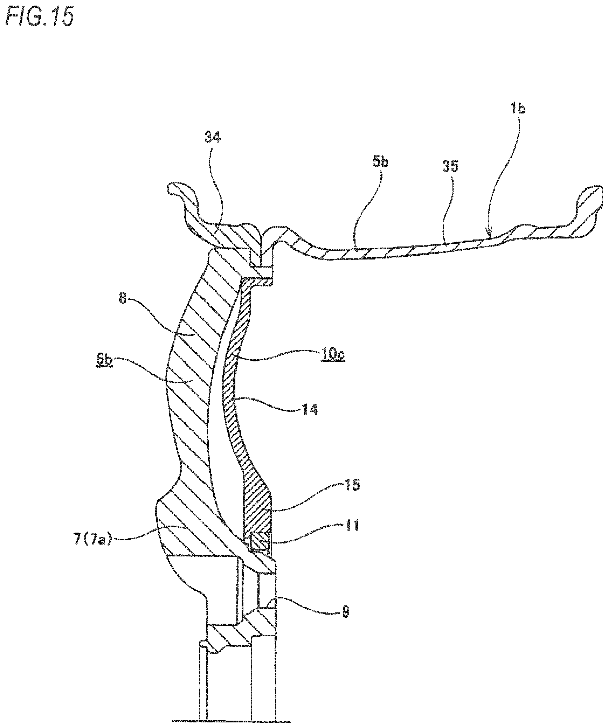

A seventh example of the embodiment of the present invention is described with reference to FIG. 15.

In a wheel 1b of the seventh example, an outer rim 34 configuring an axially outboard end portion of the rim part 5b, an inner rim 35 configuring axially intermediate portion and inner end portion of the rim part 5b, and the disc part 6b are separate components. The wheel 1b has a three-piece structure where the outer rim 34, the inner rim 35 and the disc part 6b are joined and fixed to each other by a plurality of pierce bolts (not shown).

Also, in the sixth example, the disc part 6b and a displacement extraction member 10c are separate components. In a state where a radially outer end portion of the displacement extraction member 10c (the pseudo-spokes 14, 14) is internally fitted to the radially outer end portion of the disc part 6b (the spokes 8, 8), the disc part 6b and the displacement extraction member 10c are joined and fixed to each other by adhesion, press-fitting frictional force or a plurality of other pierce bolts (not shown).

In the structure of the seventh example, the respective members and the displacement extraction member 10c configuring the wheel 1b are joined and fixed by a non-welding means such as the pierce bolts. Therefore, the strain due to the welding is not caused in each member, and the concentricity of the sensor (the plurality of displacement sensors 13 (refer to FIG. 5) or one sensor 32 (coil 33) (refer to FIG. 9)) and the to-be-detected member 11 in the free state can be easily secured.

The other configurations and operations are the same as the first to third examples of the embodiment.

Meanwhile, in the structures of the first to seventh examples of the embodiment, the mounting part 7 (7a), to which the sensor (13 or 32) is supported, of the wheel 1 (1a, 1b) is a part with which the radially inner end portion of the brake rotor 17 is in contact in the mounted state to the vehicle (refer to FIG. 7). For this reason, when the heat (frictional heat) generated from the brake rotor 17 upon the braking is transferred to the mounting part 7 (7a) and the sensor (13 or 32) is thus influenced by the heat, the output signal of the sensor (13 or 32) may drift due to the temperature change and the measurement accuracy of the load may be correspondingly lowered.

As heat measures for preventing the problem, when implementing the structure of the first example (and the third to seventh examples that are modified embodiments thereof) of the embodiment, a configuration where a pair of separate displacement sensors 13 is arranged at the radially opposite sides of all the displacement sensors 13 (for example, a configuration where the even number of the displacement sensors 13, 13 are equally spaced in the circumferential direction) is adopted. A difference between the output signal of each of the displacement sensors 13, 13 and an output signal of the separate displacement sensor 13 located at each of the radially opposite sides may be calculated to cancel the influence of the drift. This processing can be performed by the calculator.

Also, as the heat measures, when implementing the structure of the second example (and the third to seventh examples that are modified embodiments thereof) of the embodiment, a temperature sensor may be provided in the vicinity of one sensor 32 (the coil 33) and correction of canceling the influence of the drift by using a temperature detected by the temperature sensor may be performed. In the meantime, the correction processing may be performed by the calculator.

Also, when implementing the present invention, as a modified embodiment of the first to seventh examples of the embodiment, a configuration where the radially inner end portion of the displacement extraction member is provided with the sensor (detecting part) and the mounting part of the wheel is provided with the to-be-detected part may be adopted.

### [Eighth Example of Embodiment]

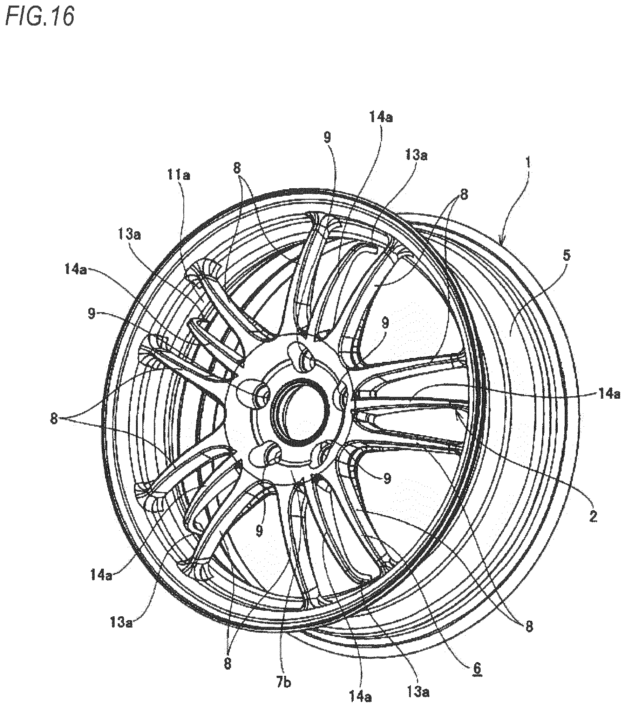

An eighth example of the embodiment of the present invention is described with reference to FIGS. 16 to 19.

In the eighth example, as the displacement extraction member, a plurality of pseudo-spokes 14a, 14a radially arranged with being equally spaced in the circumferential direction is adopted.

The pseudo-spokes 14a, 14a are respectively arranged between the spokes 8, 8, which are adjacent to each other in the circumferential direction, of the plurality of spokes 8, 8 configuring the wheel 1. A radially inner end portion of each of the pseudo-spokes 14a, 14a is integrally joined to axially outboard end portion and intermediate portion of an outer peripheral surface of a mounting part 7b configuring the wheel 1. A radially outer end portion of each of the pseudo-spokes 14a, 14a closely faces a part near the axially outboard end of the inner peripheral surface of the rim part 5 configuring the wheel 1.

In the eighth example, the position at which the radially outer end portion of each of the pseudo-spokes 14a, 14a closely faces the inner peripheral surface of the rim part 5 deviates axially inboard and circumferentially with respect to the joining position of the radially outer end portion of each of the spokes 8, 8 to the inner peripheral surface of the rim part 5. Also, in the eighth example, a circular ring-shaped to-be-detected member 11a is supported and fixed to a part near the axially outboard end of the inner peripheral surface of the rim part 5, which deviates axially inboard with respect to the joining position of the radially outer end portion of each of the spokes 8, 8, and displacement sensors 13a, 13a are respectively supported and fixed to the radially outer end portion of each of the pseudo-spokes 14a, 14a. A detecting part 12a of each of the displacement sensors 13a, 13a is closely arranged to radially face the inner peripheral surface of the to-be-detected member 11a.

In the eighth example configured as described above, the displacement sensors 13a, 13a are respectively supported and fixed to the radially outer end portion of each of the pseudo-spokes 14a, 14a distant radially from the mounting part 7b. For this reason, even when the heat generated from the brake rotor 17 upon the braking is transferred to the mounting part 7b, it is possible to sufficiently suppress the influence of the heat on the displacement sensors 13a, 13a. Therefore, it is possible to effectively prevent the output signals of the displacement sensors 13a, 13a from drifting due to the temperature change based on the heat.

Even when implementing the eighth example, the heat measures similar to each of the above examples may be taken.

The other configurations and operations are the same as the first example of the embodiment.

### [Ninth Example of Embodiment]

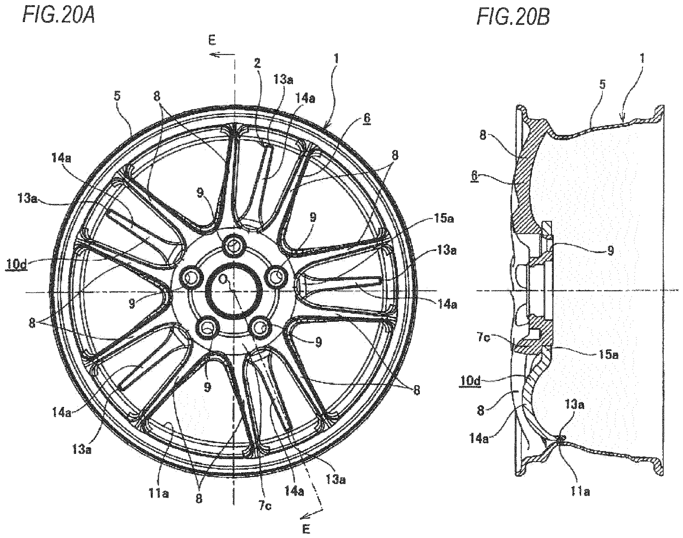

A ninth example of the embodiment is described with reference to FIG. 20.

In the ninth example, a displacement extraction member 10d has the plurality of pseudo-spokes 14a, 14a, and a circular ring-shaped annular coupling part 15a configured to couple the radially inner end portions of the pseudo-spokes 14a, 14a each other. The displacement extraction member 10d is provided separately from the wheel 1. In the ninth example, in a state where the displacement extraction member 10d is arranged at a position offset more axially inboard than each of the spokes 8, 8 configuring the wheel 1, the annular coupling part 15a is externally fitted and fixed to an axially inboard end portion of a mounting part 7c configuring the wheel 1.

In the ninth example configured as described above, after the wheel 1 and the displacement extraction member 10d are separately made, the to-be-detected member 11a is supported and fixed to the inner peripheral surface of the rim part 5 configuring the wheel 1, and the displacement sensors 13a, 13a are supported and fixed to the radially outer end portions of the pseudo-spokes 14a, 14a. Thereafter, the annular coupling part 15a is externally fitted and fixed to the mounting part 7c. The assembling is performed in corresponding order, so that it is possible to easily perform the operation of mounting to-be-detected member 11a to the inner peripheral surface of the rim part 5 and the operation of mounting the displacement sensors 13a, 13a to the radially outer end portions of the pseudo-spokes 14a, 14a.

The other configurations and operations are the same as the eighth example of the embodiment.

In the meantime, when implementing the present invention, as a modified embodiment of the eighth and ninth examples of the embodiment, a configuration where one sensor having the detecting part configured as a single coil is used or a configuration where the wheel has a two-piece structure or three-piece structure may be adopted.

Also, a configuration where the to-be-detected part is provided to the radially outer end portion of the displacement extraction member and the detecting part is provided to the rim part of the wheel may be adopted.

Also, a configuration where the plurality of pseudo-spokes is arranged to overlap axially inboard the plurality of spokes configuring the wheel 1 (the plurality of pseudo-spokes is arranged to be hidden at the rear of the spokes, as seen from the axially outboard side, i.e., to be axially overlapped, and in other words, to be the same phase in the circumferential direction) may be adopted.

### [Tenth Example of Embodiment]

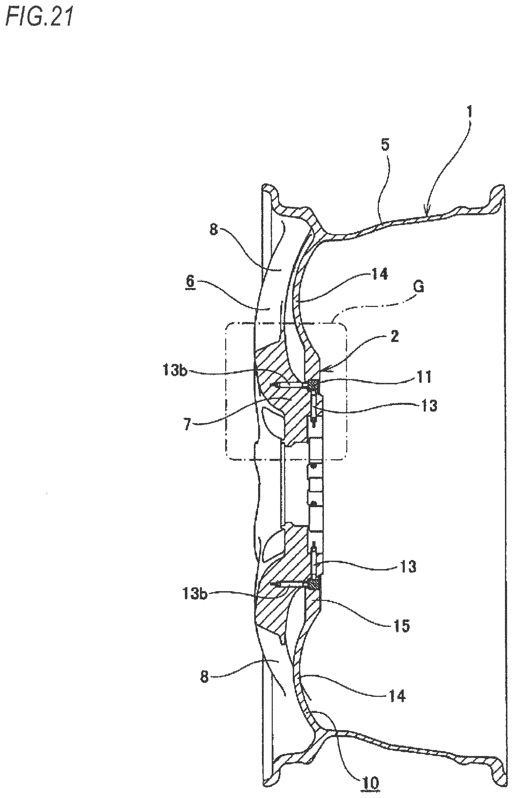

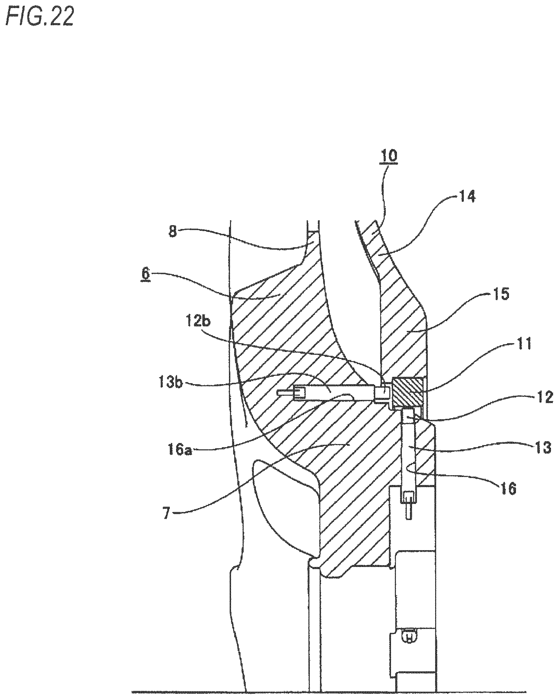

A tenth example of the embodiment of the present invention is described with reference to FIGS. 21 and 22.

The tenth example is a modified embodiment of the first example of the embodiment.

In the first example of the embodiment, as the sensor for detecting displacement of the to-be-detected member 11, only the plurality of displacement sensors 13, 13 for radial displacement detection each of which is a sensor for measuring radial displacement of the to-be-detected member 11 is provided.

However, in the tenth example, a plurality of displacement sensors 13b, 13b for axial displacement detection each of which is a sensor for measuring axial displacement of the to-be-detected member 11 is provided, in addition to the plurality of displacement sensors 13, 13 for radial displacement detection.

The number of the displacement sensors 13b, 13b for axial displacement detection is the same as the displacement sensors 13, 13 for radial displacement detection. Also, each of the displacement sensors 13b, 13b for axial displacement detection is an eddy current type, like the displacement sensors 13, 13 for radial displacement detection, and includes a detecting part 12b.

A detection direction of each of the displacement sensors 13b, 13b for axial displacement detection coincides with the axial direction of the wheel 1. An axially inboard end portion, which is the detecting part 12b, of each of the displacement sensors 13b, 13b for axial displacement detection is supported and fixed to the mounting part 7, which is the radially inner end part of the wheel 1, with being arranged to closely face each of the plurality of circumferentially equidistant places of the axially outboard surface of the to-be-detected member 11.

The circumferential positions of the parts, which the detecting parts 12b of the displacement sensors 13b, 13b for axial displacement detection axially face, of the axially outboard surface of the to-be-detected member 11 coincide with the circumferential positions of the parts, which the detecting parts 12 of the displacement sensors 13, 13 for radial displacement detection radially face, of the inner peripheral surface of the to-be-detected member 11.

Also, in the tenth example, in order to support and fix the displacement sensors 13b, 13b for axial displacement detection to the mounting part 7, a plurality of support holes 16a each of which extends axially and has an opened axially inboard end portion is provided. The support holes 16a are provided at a plurality of places, of which circumferential phases are the same as the support holes 16 for supporting and fixing the displacement sensors 13, 13 for radial displacement detection, of the radially intermediate portion of the mounting part 7. In a state where the displacement sensors 13b, 13b for axial displacement detection are respectively inserted in the respective support holes 16a, the displacement sensors 13b, 13b for axial displacement detection are fixed to the mounting part 7 by interference fitting, adhesion, screwing or the like.

Also, in the free state where the load is not applied to the wheel 1, the axially facing distances between the axially outboard surface of the to-be-detected member 11 and the detecting parts 12b of the displacement sensors 13b, 13b for axial displacement detection are the same.

Also, while the automobile having the wheel equipped with a sensing device of the tenth example is traveling, the power feeding and the transmission of the output signal to the calculator provided at the vehicle body-side are performed in the displacement sensors 13b, 13b for axial displacement detection, in the same manner as the displacement sensors 13, 13 for radial displacement detection.

Also in the wheel equipped with a sensing device of the tenth example configured as described above, when the load is applied to the vehicle wheel 4 (refer to FIG. 7), the wheel 1 is elastically deformed by an amount corresponding to the load. Then, the annular coupling part 15 configuring the displacement extraction member 10 is displaced in association with the elastic deformation. As a result, the positional relationship between the to-be-detected member 11 supported to the annular coupling part 15 and the detecting part 12 of each of the displacement sensors 13, 13 for radial displacement detection supported to the mounting part 7 of the wheel 1 and detecting part 12b of each of the displacement sensors 13b, 13b for axial displacement detection changes, so that the output signal of each of the displacement sensors 13, 13b correspondingly changes.

Also in the tenth example, like the first example of the embodiment, while the vehicle wheel 4 is rotating with only constant radial load being applied thereto, the output signals (S₁ to S₅) of the displacement sensors 13, 13 for radial displacement detection are as shown in FIG. 6, as the theoretical values, for example. The amplitudes of the output signals (S₁ to S₅) change in correspondence to the magnitude of the radial load, and the phases of the output signals (S₁ to S₅) change in correspondence to the direction of the radial load. Therefore, when the relation between the magnitude of the radial load and the amplitude is investigated in advance, it is possible to obtain the magnitude of the radial load from the amplitude by the calculator.

On the other hand, for example, when the automobile is turning or is applied with the lateral wind, the vehicle wheel 4 is applied with an axial load (a lateral force input from a contact patch of the tire 3), in addition to the radial load. Then, the annular coupling part 15 and the to-be-detected member 11 are rotated (tilted) about the axially inboard surface of the mounting part 7 in a direction of moment based on the axial load (lateral force) by a magnitude corresponding to the axial load (lateral force),

In this case, the output signal of each of the displacement sensors 13b, 13b for axial displacement detection changes, in correspondence to the direction and magnitude of the axial load. Therefore, when a relation between the direction and magnitude of the axial load and the output signal of each of the displacement sensors 13b, 13b for axial displacement detection is investigated in advance, it is possible to obtain the direction and magnitude of the axial load from the output signal of each of the displacement sensors 13b, 13b for axial displacement detection by the calculator.

Also, in this case, as described above, the annular coupling part 15 and the to-be-detected member 11 are rotated due to the axial load in the direction of the moment based on the axial load. The radially positional relationship between the inner peripheral surface of the to-be-detected member 11 and the detecting part 12 of each of the displacement sensors 13, 13 for radial displacement detection changes in correspondence to the rotations, so that the output signal of each of the displacement sensors 13, 13 for radial displacement detection correspondingly changes.

There is a predetermined relationship between the change in the output signal of each of the displacement sensors 13, 13 for radial displacement detection, which is caused due to the axial load, and the change in the output signal of each of the displacement sensors 13b, 13b for axial displacement detection, which is caused due to the axial load.

Therefore, for example, when the output signal of each of the displacement sensors 13, 13 for radial displacement detection is corrected using the output signal of each of the displacement sensors 13b, 13b for axial displacement detection, it is possible to obtain the radial load from the corrected output signal of each of the displacement sensors 13, 13 for radial displacement detection.

The other configurations and operations are the same as the first example of the embodiment.

### [Eleventh Example of Embodiment]

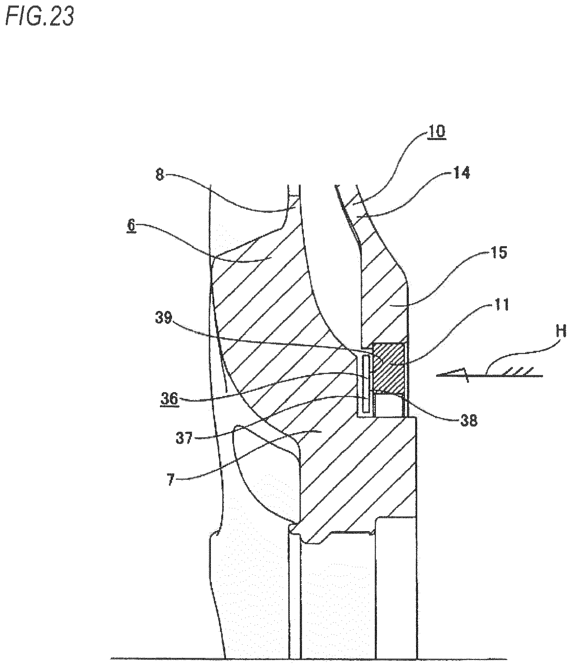

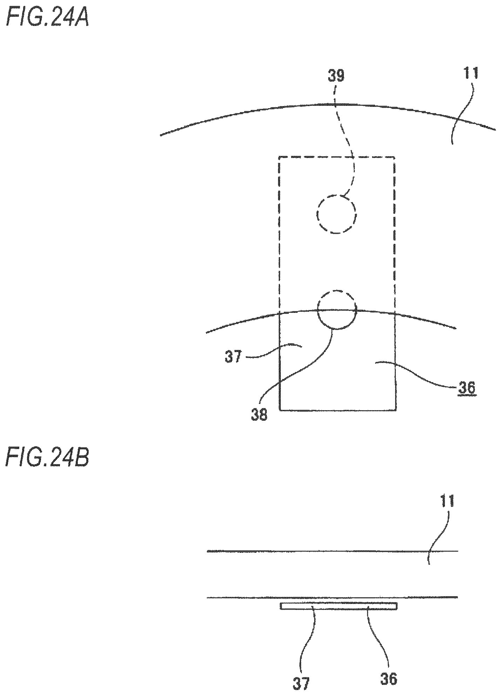

An eleventh example of the embodiment of the present invention is described with reference to FIGS. 23 and 24.

In the eleventh example, the structure of the sensor for measuring radial and axial displacements at the plurality of circumferential places of the to-be-detected member 11 is different from the tenth example of the embodiment.

That is, in the eleventh example, as the sensor, a plurality of (five, in the eleventh example) detection devices 36 is provided, instead of the plurality of the displacement sensors 13, 13 for radial displacement detection and the plurality of the displacement sensors 13b, 13b for axial displacement detection (refer to FIGS. 21 and 22).

Each detection device 36 includes a rectangular substrate 37, and a first detecting part (first detecting element) 38 and a second detecting part (second detecting element) 39 provided at two places spaced in a longitudinal direction (an upper and lower direction in FIGS. 23 and 24A) on one surface (a right surface in FIG. 23, a front surface in FIG. 24A and an upper surface in FIG. 24B) of the substrate 37. The first detecting part 38 and the second detecting part 39 are planar coils mounted (printed) on the one surface of the substrate 37. In the eleventh example, each of the first detecting part 38 and the second detecting part 39 corresponds to the detecting part.

The longitudinal direction of each substrate 37 coincides with the radial direction of which a center is the central axis of the wheel 1. One surface of the substrate 37 on which the respective detecting parts (the first detecting part 38 and the second detecting part 39) are provided is supported and fixed to the mounting part 7 of the wheel 1 via a holder (not shown) with being arranged to closely face the plurality of circumferentially equidistant places of the axially outboard surface of the to-be-detected member 11.

More specifically, in this state, as shown in FIG. 24, the radially inner end portion of the axially outboard surface of the to-be-detected member 11 closely faces the radially outer half part of the first detecting part 38 in the axial direction. Also, the radially intermediate portion of the axially outboard surface of the to-be-detected member 11 closely faces the entire second detecting part 39 in the axial direction.

Also, in this state, a wiring for power feed and a wiring for signal transmission, which are not shown, are connected to each detection device 36.

Also, while the automobile having the wheel equipped with a sensing device of the eleventh example is traveling, the power feeding and the transmission of the output signal to the calculator provided at the vehicle body-side are performed in the detection devices 36, in the same manner as the displacement sensors 13, 13 of the first example of the embodiment.

In the eleventh example configured as described above, when the to-be-detected member 11 and each detection device 36 are relatively displaced in the radial direction, the facing area between the axially outboard surface of the to-be-detected member 11 and the second detecting part 39 does not change but the facing area between the axially outboard surface of the to-be-detected member 11 and the first detecting part 38 changes. Therefore, the output of the second detecting part 39 is constant as it is, and only the output of the first detecting part 38 changes.

On the other hand, when the to-be-detected member 11 and each detection device 36 are relatively displaced in the axial direction, the facing distances between the axially outboard surface of the to-be-detected member 11 and both the first and second detecting parts 38, 39 change. Therefore, both the outputs of the first and second detecting parts 38, 39 change.

That is, the first detecting part 38 functions as the displacement sensor having sensitivity in the radial direction and the axial direction, and the second detecting part 39 functions as the displacement sensor having sensitivity only in the axial direction.

When the relative displacements in the two directions occur at the same time, the relative displacement amount in the axial direction of the to-be-detected member 11 and each detection device 36 is obtained by the output of the second detecting part 39, and the relative displacement amount in the radial direction is obtained by using the output of the second detecting part 39 to correct the output of the first detecting part 38.

The other configurations and operations are the same as the first example of the embodiment.

In the meantime, when implementing the present invention, as a modified embodiment of the tenth and eleventh examples of the embodiment, the wheel may be configured to have a two-piece structure or three-piece structure. Also, the plurality of pseudo-spokes may be arranged to overlap axially inboard the plurality of spokes configuring the wheel 1 (the plurality of pseudo-spokes may be arranged to be hidden at the rear of the spokes, as seen from the axially outboard side, i.e., to be axially overlapped, and in other words, to be the same phase in the circumferential direction).

Also, when implementing the present invention, the displacement extraction member may be arranged at a position offset more axially outboard than the disc part configuring the wheel.

Also, when implementing the present invention, in order to sufficiently secure the reliability of measurement of the load and the like, a member for sealing between the detecting part and the to-be-detected part is preferably provided to prevent foreign matters such as water and metal from being introduced (interposed) between the detecting part and the to-be-detected part.

### [Twelfth Example of Embodiment]

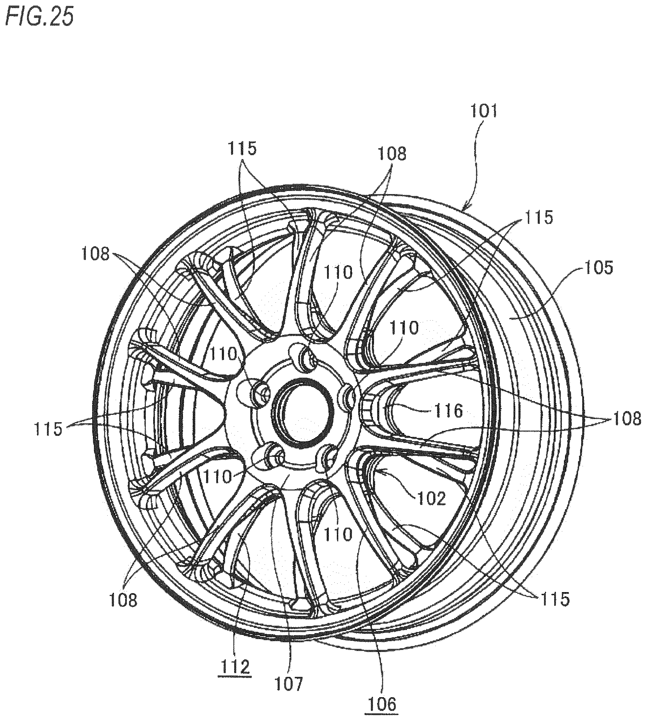

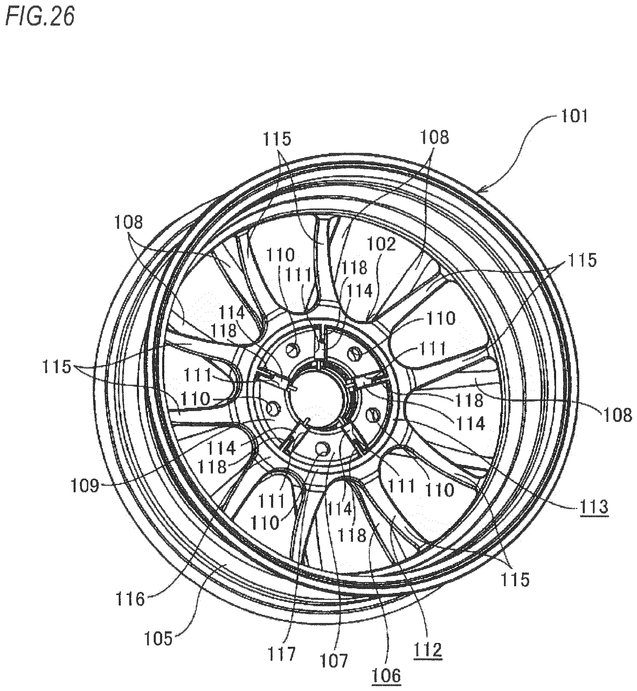

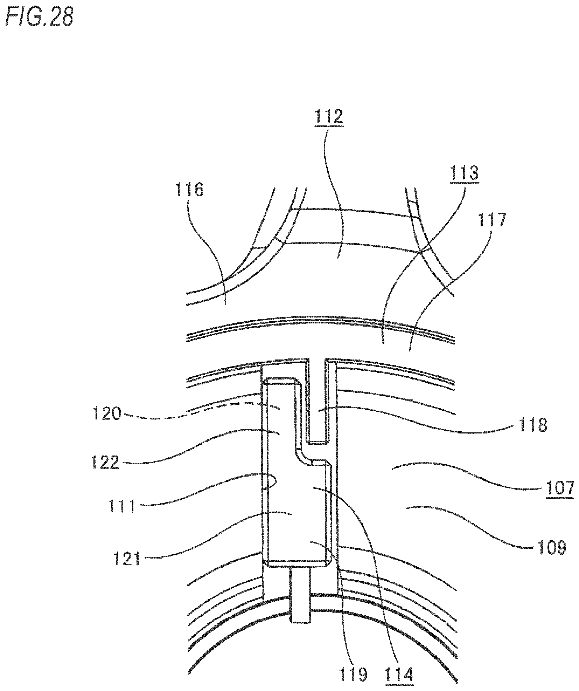

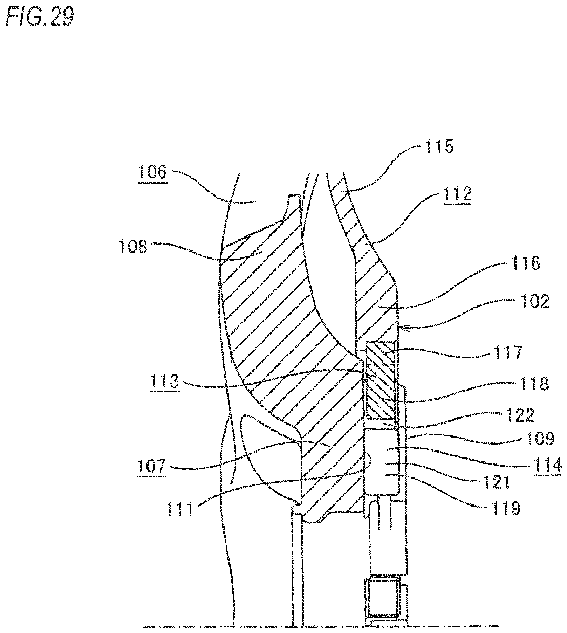

A twelfth example of the embodiment of the present invention is described with reference to FIGS. 25 to 30.

The wheel equipped with a sensing device of the twelfth example includes a wheel 101 and a sensing device 102.

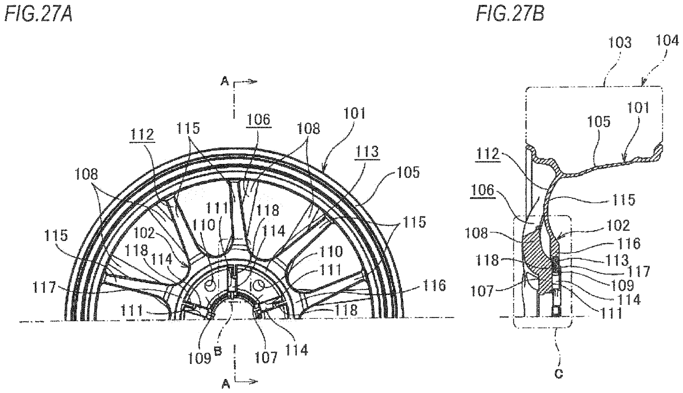

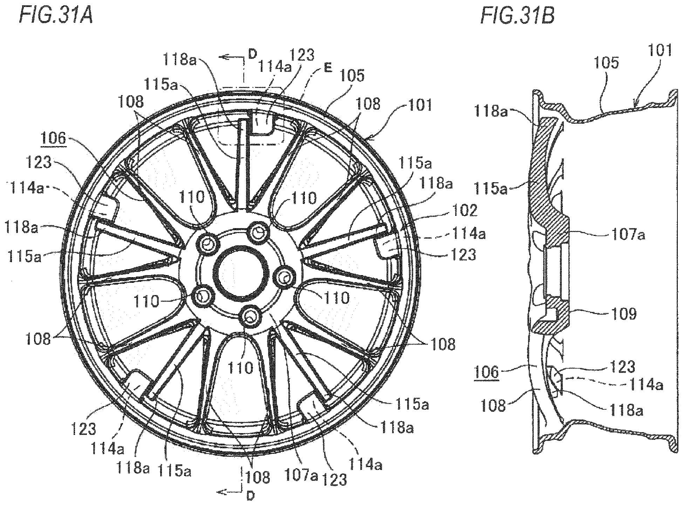

Meanwhile, in the specification, unless mentioned otherwise, the term "outboard" with respect to the axial direction indicates a side becoming an outer side in the width direction of the vehicle body in the mounted state to the vehicle, and for example, indicates a left side in FIGS. 27B, 29 and 31B, and the term "inboard" with respect to the axial direction indicates a side becoming a center side in the width direction of the vehicle body, and for example, indicates a right side in FIGS. 27B, 29 and 31B,

The wheel 101 configures a vehicle wheel 104 (refer to FIG. 27) together with a tire 103 made of rubber. The wheel 101 is made of metal having elasticity such as iron alloy, aluminum alloy and the like. In the twelfth example, the wheel 101 has one-piece structure where the wheel is integrally made as a whole by casting such as die-cast. The wheel 101 has a cylindrical rim part 105 to which the tire 103 can be mounted at an outer diameter-side thereof, and a disc part 106 having a radially outer end portion joined to the rim part 105.

The disc part 106 has a circular ring-shaped mounting part 107 configuring a radially inner end portion, and a plurality of spokes 108, 108 configuring radially intermediate portion and outer end portion.

The mounting part 107 is a part that is to be joined and fixed to a flange part (hub flange) provided to a rotation-side race (hub) configuring a rolling bearing unit for vehicle wheel support. An axially inboard surface of the mounting part 107 is configured as a planar (circular ring plane-shaped) mounting surface 109 perpendicular to a central axis thereof. Also, the mounting part 107 has mounting holes 110, 110 formed to axially penetrate at a plurality of (five, in the twelfth example) circumferentially equidistant places. An axially inboard end portion of each of the mounting holes 110, 110 opens to a radially intermediate portion of the mounting surface 109.

Also, holding concave portions 111, 111, which are axially concave, are provided at a plurality of circumferentially equidistant places (five, which is the same number as the mounting holes 110, 110, in the twelfth example), which deviate from the respective mounting holes 110, 110, of the mounting surface 109 over an entire radial length of the mounting surface. That is, each of the holding concave portions 111, 111 is formed to open toward three sides of the mounting surface 109 and the inner peripheral surface and outer peripheral surface of the mounting part 107. Also, in the twelfth example, the respective mounting holes 110, 110 and the respective holding concave portions 111, 111 are arranged alternately one by one and equally spaced in the circumferential direction.

The plurality of spokes 108, 108 is radially arranged with being circumferentially spaced. A radially inner end portion of the spoke 108 is integrally joined to an axially outboard end portion of the outer peripheral surface of the mounting part 107. A radially outer end portion of the spoke 108 is integrally joined to a part close to an axially outboard end of an inner peripheral surface of the rim part 105.

The sensing device 102 includes a displacement extraction member 112, a to-be-detected body 113, and a plurality of displacement sensors 114, 114.

The displacement extraction member 112 is arranged at a radially inner side of the rim part 105 and at an axially inboard side of the disc part 106. A radially outer end portion of the displacement extraction member 112 is supported to the rim part 105, which is a radially outer end part of the wheel 101. A radially inner end portion of the displacement extraction member 112 is a free end. In the twelfth example, the displacement extraction member 112 is formed integrally with the wheel 101 by the same metal as the wheel 101. The displacement extraction member 112 has a plurality of (the same number as the spokes 108, 108, in the twelfth example) pseudo-spokes 115, 115 radially arranged with being circumferentially spaced and a circular ring-shaped annular coupling part 116 configured to couple radially inner end portions of the pseudo-spokes 115, 115 each other.

A radially outer end portion of each of the plurality of pseudo-spokes 115, 115 is integrally joined to a part near the axially outboard end of the inner peripheral surface of the rim part 105. In the twelfth example, the joining position of the radially outer end portion of each of the pseudo-spokes 115, 115 to the inner peripheral surface of the rim part 105 deviates axially inboard and circumferentially with respect to the joining position of the radially outer end portion of each of the spokes 108, 108. In the meantime, when implementing the present invention, a configuration where the pseudo-spokes 115, 115 are arranged to overlap axially inboard the spokes 108, 108 (the pseudo-spokes are arranged to be hidden at the rear of the spokes 108, 108, as seen from the axially outboard side, i.e., to be axially overlapped, and in other words, to be the same phase in the circumferential direction) may be adopted.

In the meantime, the annular coupling part 116 is arranged at the radially outer side of the axially inboard end portion of the mounting part 107 to be coaxial (concentric) to the mounting part 107. Also, in this state, an axially inboard surface of the annular coupling part 116 is arranged at a position slightly closer to the axially outboard side than the mounting surface 109.

The to-be-detected body 113 is made of a conductive material such as iron alloy, aluminum alloy or the like. The to-be-detected body 113 has an annular base part 117 having a circular ring shape as a whole of which a section is rectangular, and to-be-detected parts 118, 118 extending radially inward from a plurality of circumferentially equidistant places (five places, in the twelfth example) of an inner peripheral surface of the annular base part 117 and each having a rectangular plate shape. The to-be-detected body 113 is coaxially supported and fixed to the annular coupling part 116.

In the twelfth example, in order to coaxially support and fix the to-be-detected body 113 to the annular coupling part 116, the annular base part 117 is internally fitted and fixed to an inner peripheral surface of the annular coupling part 116 by interference fitting, adhesion, welding or the like. Also, in this state, each of the to-be-detected parts 118, 118 is loosely (with a gap being interposed between the to-be-detected part and the surrounding member) inserted in one circumferential half portion of a radially outer half portion in each of the holding concave portions 111, 111 provided to the mounting part 107.

Each of the plurality of displacement sensors 114, 114 is an eddy current type. The plurality of displacement sensors 114, 114 is respectively held and fixed in each of the holding concave portions 111, 111 provided to the mounting part 107. Each of the displacement sensors 114, 114 includes a sensor holder 119 having a substantially rectangular shape, which is long in the radial direction of the wheel 101, and made of a synthetic resin, and a detecting part 120 held in the sensor holder 119.

An inner half part of the sensor holder 119 in the radial direction of the wheel 101 is configured as a widened part 121 having a large width dimension in the circumferential direction of the wheel 101. An outer half part of the sensor holder 119 in the radial direction of the wheel 101 is configured as a narrowed part 122 having a small width dimension in the circumferential direction of the wheel 101. Also, the widened part 121 is arranged over a substantially entire circumferential width of a radially inner half portion in the holding concave portion 111. On the other hand, the narrowed part 122 is arranged at the other circumferential half portion of a radially outer half portion in the holding concave portion 111.

The detecting part 120 is held and fixed to an inner side of the narrowed part 122. A detection direction of the detecting part 120 coincides with the circumferential direction of the wheel 101, and the detecting part 120 closely faces the other circumferential side of the to-be-detected part 118 in the circumferential direction. For this reason, when the circumferentially positional relationship between the detecting part 120 and the to-be-detected part 118 changes, an output of the detecting part 120 changes.

Also, in the twelfth example, in a free state where the wheel 101 is not elastically deformed, the circumferential facing distances between the detecting parts 120 of the displacement sensors 114, 114 and the to-be-detected parts 118, 118 are the same.

When mounting the wheel equipped with a sensing device of the twelfth example configured as described above to the automobile, in a state where the wheel equipped with a sensing device and the tire 103 are combined to configure the vehicle wheel 104, the vehicle wheel 104 is rotatably supported to the suspension device by the rolling bearing unit for vehicle wheel support, together with a rotation member for braking such as the brake rotor. In this state, the mounting surface 109 is overlapped on an axially outboard surface of the rotation member for braking, for example, and the joining members such as hub bolts are inserted or screwed into the mounting holes 110, 110. Then, the vehicle wheel 104 and the rotation member for braking are joined and fixed to the flange part (hub flange) provided to the rotation-side race (hub) configuring the rolling bearing unit for vehicle wheel support by using the joining members.

According to the wheel equipped with a sensing device of the twelfth example configured as described above, when torque (drive torque from an engine, braking torque by regeneration or brake, reverse input torque from a road surface during the traveling on a poor road, for example, and the like) is applied to the vehicle wheel 104, the wheel 101 is elastically distorted in the rotating direction by a magnitude corresponding to the torque. Then, the relative displacement in the rotating direction occurs between the mounting part 107 and the annular coupling part 116 configuring the displacement extraction member 112 joined to the rim part 105, in association with the elastic distortion. As a result, the circumferentially positional relationship (facing distance) changes between the detecting part 120 of each of the displacement sensors 114, 114 supported to the mounting part 107 and each of the to-be-detected parts 118, 118 configuring the to-be-detected body 113 supported to the annular coupling part 116. As the positional relationship changes, the output of the detecting part 120 of each of the displacement sensors 114, 114 changes. Since the output change is associated with the torque applied to the wheel 101, it is possible to measure the torque (drive force, braking force and the like) applied to the wheel 101 by using the output change.

Meanwhile, in the structure of the twelfth example, even when a road surface reactive force (vertical load) is applied to the wheel 101, the relative displacement occurs between the mounting part 107 and the annular coupling part. As a result, the circumferentially positional relationship (facing distance) may change between the detecting part 120 of each of the displacement sensors 114, 114 and each of the to-be-detected parts 118, 118.

The change in the positional relationship (facing distance) due to the road surface reactive force (vertical load) and the change in the positional relationship (facing distance) due to the torque can be separated each other by using rotating angle information of the wheel 101.

That is, the change in the positional relationship (facing distance) due to the road surface reactive force (vertical load) does not occur at an upper end or lower end position of the wheel 101. For this reason, when the output signals, which are generated when the detecting part 120 and the to-be-detected part 118 pass the upper end or lower end position of the wheel 101, are picked using the rotating angle information of the wheel 101, it is possible to obtain the torque separated from the road surface reactive force, based on the output signals.

Here, the rotating angle information of the wheel 101 may be acquired by the rotating angle detection means mounted to the rolling bearing unit for vehicle wheel support or a part of a powertrain of the vehicle body-side, for example. Alternatively, the change in the positional relationship (facing distance) due to the road surface reactive force (vertical load) causes a cyclic change in the output signal of each of the displacement sensors 114, 114. Therefore, it may be possible to acquire the rotating angle information of the wheel 101, based on a phase of the output signal of each of the displacement sensors 114, 114 (without using the rotating angle detection means).

Also, in the twelfth example, it is possible to reduce a deviation, which is caused due to wheel rigidity, a sensor error and the like, by obtaining an average of the output signals of the plurality of displacement sensors 114, 114.

Also, in the twelfth example, the radially outer end portion of the displacement extraction member 112 is supported to the radially outer end part (rim part 105) of the wheel 101, the to-be-detected body 113 is supported to the radially inner end portion (annular coupling part 116) of the displacement extraction member 112, and the displacement sensors 114, 114 are respectively supported to the radially inner end part (mounting part 107) of the wheel 101. For this reason, the change amount in the circumferentially positional relationship between each of the to-be-detected parts 118, 118 of the to-be-detected body 113 and the detecting part 120 of each of the displacement sensors 114, 114, which is generated when the torque applied to the vehicle wheel 104 changes, increases, like the change amount in the circumferentially positional relationship between the radially outer end part and the radially inner end part of the wheel 101, and the change amount in the output of the detecting part 120 of each of the displacement sensors 114, 114 also increases. Also, in the twelfth example, each of the to-be-detected parts 118, 118 of the to-be-detected body 113 and the detecting part 120 of each of the displacement sensors 114, 114 are arranged to be adjacent to each other, based on the provision of the displacement extraction member 112. For this reason, it is possible to increase the output of the detecting part 120 of each of the displacement sensors 114, 114. Therefore, it is possible to easily secure the reliability of the torque measurement.

In the meantime, when using the wheel equipped with a sensing device of the twelfth example, as the method of feeding the power to each of the displacement sensors 114, 114 and transmitting the output signal of each of the displacement sensors 114, 114 to a controller (calculator) provided at the vehicle body-side, an appropriate method may be adopted.

For example, in order to perform the power feeding and the transmission of the output signal as described above, a power feeding means (a generator, a charger and a battery) and a signal communication means may be mounted to the rolling bearing unit for vehicle wheel support.

In this case, for example, as the generator, a generator configured to generate power on the basis of the relative rotation between the stationary-side race and rotation-side race (hub) configuring the rolling bearing unit for vehicle wheel support is adopted. The power obtained by the power generation is accumulated in the battery via the charger, and the power accumulated in the battery is fed to each of the displacement sensors 114, 114 through a wiring.

Also, as the signal communication means, a signal communication means including a wireless communication device configured to wirelessly communicate, to the controller arranged at the vehicle body-side, the output signal transmitted from each of the displacement sensors 114, 114 through a wiring is adopted, for example.

In the meantime, a rotating angle detection means (for example, an absolute type encoder such as an optical type, a magnetic type and the like) for detecting a rotating angle of the rotation-side race (hub) relative to the stationary-side race may be mounted to the rolling bearing unit for vehicle wheel support, as required (for example, in order to acquire the rotating angle information of the wheel 101).

In addition, the power may be fed to each of the displacement sensors 114, 114 from the battery supported to the wheel 101, and the output signal of each of the displacement sensors 114, 114 may be transmitted to the controller of the vehicle body-side by a wireless antenna supported to the wheel 101.

Also, in the automobile having the wheel equipped with a sensing device of the twelfth example mounted thereto, a control device mounted to the vehicle body-side may be provided with a function of obtaining the torque applied to the vehicle wheel 104 by using the output of the detecting part 120 of each of the displacement sensors 114, 114. In addition to this, a function of, when the excessive reverse input torque is applied from the road surface-side to the vehicle wheel 104 (which is a case where the magnitude of the obtained torque exceeds a predetermined threshold value, for example, a case where the outputs of the detecting parts 120 of the predetermined number (for example, two) or more of the displacement sensors 114 exceed the predetermined threshold value), immediately interrupting connection of a clutch device to prevent the excessive reverse input torque from being applied to each member configuring a drive train may be provided. When such function is provided, it is possible to suppress the required strength of each member configuring the drive train, so that it is possible to facilitate the miniaturization, weight-saving, cost saving and the like of the drive train. Also, in this case, when the outputs of the detecting parts 120 of the plurality of displacement sensors 114 exceed the predetermined threshold value, if it is determined that the excessive reverse input torque is applied from the road surface-side to the vehicle wheel 104, it is possible to make reliable determination even though the high-accuracy and high-resolution displacement sensor 114 is not used. Accordingly, it is possible to implement the relatively low-priced configuration.

In the meantime, when implementing the present invention, as a modified embodiment of the first example of the embodiment, the displacement sensor (the detecting part) may be provided to the radially inner end portion of the displacement extraction member, and the to-be-detected part may be provided to the mounting part of the wheel.

### [Thirteenth Example of Embodiment]

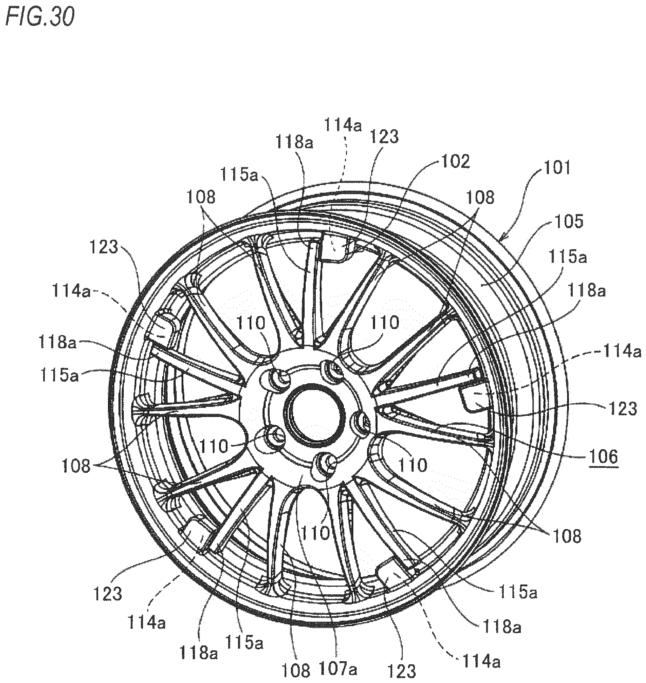

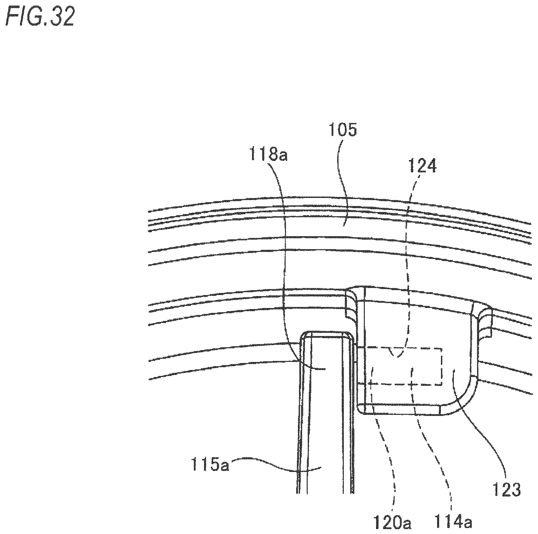

A thirteenth example of the embodiment of the present invention is described with reference to FIGS. 30 to 32.

In the thirteenth example, as the displacement extraction member, a plurality of (five, in the thirteenth example) pseudo-spokes 115a, 115a is adopted. The pseudo-spokes 115a, 115a are radially arranged at a plurality of circumferentially equidistant places (five places) between the inner peripheral surface of the rim part 105 configuring the wheel 101 and an outer peripheral surface of a mounting part 107a and are radially arranged between the spokes 108, 108 adjacent to each other in the circumferential direction.

A radially inner end portion of each of the pseudo-spokes 115a, 115a is configured as a fixed end integrally joined to axially outboard end portion and intermediate portion of the outer peripheral surface of the mounting part 107a. On the other hand, a radially outer end portion of each of the pseudo-spokes 115a, 115a is configured as a free end facing a part close to the axially outboard end of the inner peripheral surface of the rim part 105 with being radially spaced.

Also, sensor holding parts 123, 123 are provided at positions close to one side in the circumferential direction of portions, which the radially outer end portions of the pseudo-spokes 115a, 115a radially face, of the part close to the axially outboard end of the inner peripheral surface of the rim part 105. The sensor holding parts 123, 123 protrude radially inward, respectively. Each of the sensor holding parts 123, 123 is formed with a holding hole 124 opening toward the other side in the circumferential direction.

In the holding holes 124 of the sensor holding parts 123, 123, eddy current type displacement sensors 114a, 114a are respectively held. A detection direction of a detecting part 120a provided at the other circumferential end portion of each of the displacement sensors 114a, 114a coincides with the circumferential direction.

Each of the to-be-detected parts 118a, 118a is provided integrally with the radially outer end portion of each of the pseudo-spokes 115a, 115a. In the meantime, each of the to-be-detected parts 118a, 118a is made of a conductive material.

Also, the detecting part 120a of each of the displacement sensors 114a, 114a closely faces one circumferential side of each of the to-be-detected parts 118a, 118a in the circumferential direction
Also in the wheel equipped with a sensing device of the thirteenth example configured as described above, when the torque is applied to the wheel 101, the wheel 101 is elastically distorted in the rotating direction by a magnitude corresponding to the torque. Then, the relative displacement in the rotating direction occurs between the rim part 105 and the mounting part 107a, in association with the elastic distortion. As a result, the circumferentially positional relationship (facing distance) changes between the detecting part 120a of each of the displacement sensors 114a, 114a held in the sensor holding parts 123, 123 of the rim part 105 and each of the to-be-detected parts 118a, 118a, which are the radially outer end portions of the pseudo-spokes 115a, 115a joined to the mounting part 107a. As the positional relationship changes, the output of the detecting part 120a of each of the displacement sensors 114a, 114a changes. Since the output change is associated with the torque applied to the wheel 101, it is possible to measure the torque applied to the wheel 101 by using the output change.

In particular, in the thirteenth example, the detecting part 120a of each of the displacement sensors 114a, 114a and each of the to-be-detected parts 118a, 118a are arranged at the radially outer end part of the wheel 101. For this reason, it is possible to increase the change amount in the circumferentially positional relationship between the detecting part 120a of each of the displacement sensors 114a, 114a and each of the to-be-detected parts 118a, 118a, per unit torque applied to the wheel 101. Therefore, it is possible to increase the resolution of the torque.

The other configurations and operations are the same as the first example of the embodiment.

In the meantime, when implementing the present invention, as a modified embodiment of the second example of the embodiment, the displacement sensor (detecting part) may be provided to the radially outer end portion of the displacement extraction member (pseudo-spoke), and the to-be-detected part may be provided to the rim part of the wheel.

Also, when implementing the present invention, in order to more sufficiently secure the reliability of the torque measurement, a structure for sealing between the detecting part and the to-be-detected part is preferably provided to prevent foreign matters such as water and metal from being introduced (interposed) between the detecting part and the to-be-detected part.

### Industrial Applicability

When implementing the wheel equipped with a sensing device of the present invention, the to-be-detected part may be formed integrally with the wheel or the displacement extraction member. In other words, a part of the wheel or the displacement extraction member may be configured as the to-be-detected part.

Also, the wheel equipped with a sensing device of the present invention may be mounted to a rolling bearing unit for vehicle wheel support for a driven wheel, without limited to the rolling bearing unit for vehicle wheel support for a non-driven wheel.

Also, when the power feeding means for feeding the power to the sensor and the signal transmission means for transmitting the output signal of the sensor to the vehicle body-side are incorporated in the rolling bearing unit for vehicle wheel support to which the wheel equipped with a sensing device of the present invention is to be mounted, the corresponding means is not limited to the means adopted in each example, and a variety of means (an electromagnetic induction type or resonance type wireless power feeding device, a contact type communication power feeding means, and the like) may be adopted.

Also, the rolling bearing unit for vehicle wheel support to which the wheel equipped with a sensing device of the present invention is to be mounted may be a rolling bearing unit for vehicle wheel support with no power feeding means and signal communication means, which has been known in the related art. In this case, the power may be fed to the detecting part (sensor) from the battery supported to the wheel, for example, and the output signal of the detecting part may be transmitted to the calculator of the vehicle body-side by the wireless antenna supported to the wheel, for example.

Also, the wheel equipped with a sensing device of the present invention can measure the other inputs (acceleration, temperature and the like) causing deformation in the wheel, in the same manner as the load, without being limited to the load to be applied to the wheel. Also, the wheel equipped with a sensing device of the present invention may be used to measure the relative displacement between one radial end-side part and the other radial end-side part of the wheel.

When implementing the present invention, the wheel is not limited to one-piece structure where it is integrally formed as a whole by the casting, and may have a multiple-piece structure where the wheel has a plurality of components joined to each other by welding, screwing or the like. Also, the displacement extraction member may be provided separately from the wheel and may be then joined to the wheel by welding, screwing or the like.

Also, when implementing the present invention, the to-be-detected part may be provided separately from the wheel or the displacement extraction member, like the twelfth example of the embodiment, or may be formed integrally with the wheel or the displacement extraction member, like the thirteenth example of the embodiment.

Also, in the respective examples, the detecting part and the to-be-detected part are combined in plural. However, when implementing the present invention, at least one combination may be provided, and the specific number of the combinations is not particularly limited.

The subject application is based on Japanese Patent Application No. 2016-141157 filed on July 19, 2016, Japanese Patent Application No. 2016-167816 filed on August 30, 2016, and Japanese Patent Application No. 2016-211659 filed on October 28, 2016, the contents of which are incorporated herein by reference.

### Description of Reference Numerals

1, 1a, 1b: wheel, 2: sensing device, 3: tire, 4: wheel, 5, 5a, 5b: rim part, 6, 6a, 6b: disc part, 7, 7a, 7b, 7c: mounting part, 8: spoke, 9: mounting hole, 10, 10a, 10b, 10c, 10d: displacement extraction member, 11, 11a: to-be-detected member, 12, 12a, 12b: detecting part, 13, 13a, 13b: displacement sensor, 14, 14a: pseudo-spoke, 15, 15a: annular coupling part, 16, 16a: support hole, 17: rotor, 18: rolling bearing unit for vehicle wheel support, 19: outer ring, 20: hub, 21: ball, 22a, 22b: outer ring raceway, 23: stationary-side flange, 24: hub main body, 25: inner ring, 26a, 26b: inner ring race, 27: rotation-side flange, 28: mounting hole, 29: seal ring, 30: cap, 31: mounting hole, 32: sensor, 33: coil, 34: outer rim, 35: inner rim, 36: detection device, 37: substrate, 38: first detecting part, 39: second detecting part, 101: wheel, 102: sensing device, 103: tire, 104: wheel, 105: rim part, 106: disc part, 107, 107a: mounting part, 108: spoke, 109: mounting surface, 110: mounting hole, 111: holding concave portion

## Claims

1. A wheel equipped with a sensing device comprising:
a wheel, and
a sensing device,
wherein the sensing device comprises a displacement extraction member, a to-be-detected part, and a detecting part,
wherein one radial end portion of the displacement extraction member is supported to one radial end-side portion of the wheel,
wherein the other radial end portion of the displacement extraction member is a free end,
wherein the to-be-detected part is provided to one of the other radial end-side portion of the wheel and the other radial end portion of the displacement extraction member,
wherein the detecting part is provided to the other of the other radial end-side portion of the wheel and the other radial end portion of the displacement extraction member, and is arranged in a vicinity of the to-be-detected part, and
wherein an output of the detecting part changes in association with a change in positional relationship between the detecting part and the to-be-detected part.

2. The wheel equipped with a sensing device according to claim 1,
wherein the output of the detecting part changes in association with a change in positional relationship in a circumferential direction of the wheel between the detecting part and the to-be-detected part.
